# EUROPÄISCHE PATENTSCHRIFT

(11) **EP 4 483 751 B1**
(45) Veröffentlichungstag und Bekanntmachung des Hinweises auf die Patenterteilung: **26.08.2026**
(21) Anmeldenummer: 24212606.8
(22) Anmeldetag: 14.05.2013
(51) Int. Cl.: A46B 3/00, B29C 45/14, B29C 45/16, A46B 9/02, A46D 3/00, A46B 15/00, A46B 5/02, A46B 1/00

(54) **INTERDENTALBÜRSTE**
INTERDENTAL BRUSH
BROSSE INTERDENTAIRE

(30) Priorität: 02.07.2012 EP 12004914
(43) Veröffentlichungstag der Anmeldung: 01.01.2025
(60) Teilanmeldung: 26192517.6
(62) Dokumentnummer(n) der früheren Anmeldung(en) nach Art. 76 EPÜ: 22185822.8 / 4 098 147; 20176973.4 / 3 729 997; 15179848.5 / 2 974 619; 13725569.1 / 2 866 610
(73) Patentinhaber: Trisa Holding AG, 6234 Triengen (CH)
(72) Erfinder: Schär, Michael, 6243 Egolzwil (CH); Zurfluh, Peter, 6055 Alpnach Dorf (CH)
(74) Vertreter: Latscha Schöllhorn Partner AG

(56) Entgegenhaltungen:
- WO-A1-2012/110226
- JP-A- 2004 209 242
- JP-A- 2012 152 928
- JP-A- 2013 188 299
- US-A1- 2011 041 271

## Beschreibung

Die vorliegende Erfindung betrifft eine Interdentalbürste gemäss Anspruch 1.

Die Druckschrift US 3,698,405 offenbart Zahnstocher mit einem Kunststoff oder Metallstab, wobei ein Gummischwammmantel auf der gesamten Länge des Stabs an diesem befestigt ist. Von der Oberfläche des Gummischwamms können Stummel vorstehen. Der Gummischwamm soll mindestens 70 % Luft aufweisen. Bei einer weiteren Ausführungsform ist der Gummi oder Gummischwamm mit dem Stab nur über eine kurze Distanz bei dessen Enden befestigt.

Das Dokument WO 98/16169 offenbart einen Interdentalreiniger, welcher aus einem länglichen, stabförmigen Träger aus einem ersten Kunststoffmaterial besteht, der in Teilbereichen seiner Oberfläche von zumindest einer Ein- oder Auflage aus einem zweiten Kunststoffmaterial überdeckt ist, welches weicher als das erste Kunststoffmaterial ist. Dabei kann die Einlage in einer in dem Träger ausgebildeten Ausnehmung angeordnet und formschlüssig mit dieser gehalten sein. Wenn das erste Kunststoffmaterial des Trägers und/oder das zweite Kunststoffmaterial der Ein- oder Auflage ein oder mehrere Additive enthält, kann die Reinigungs- und Pflegewirkung variiert und optimiert werden. Zur Herstellung eines derartigen Interdentalreinigers wird das zweite Kunststoffmaterial der Ein- oder Auflage auf das erste Kunststoffmaterial des Trägers aufgespritzt, wobei der Träger und die Ein- oder Auflage in einem Zwei-Komponenten-Spritzverfahren hergestellt werden können.

Weiter umfasst ein aus dem Dokument EP 1 258 227 A bekanntes Reinigungsinstrument für einen Zahnwurzelkanal einen Kopfabschnitt und einen sich daran anschliessenden Reinigungsabschnitt mit einem Schaft, der an seiner Mantelfläche mit Borsten versehen ist. Damit insbesondere der Zahnwurzelkanal mit dem Reinigungsinstrument zuverlässig gereinigt werden kann, ist der Schaft zusammen mit den Borsten einstückig ausgebildet.

Weiter offenbart das Dokument WO 2008/146968 A ein Verfahren und ein Werkzeug zur Herstellung einer Mascara-Bürste. Das Werkzeug weist einen oberen Formkasten und einen unteren Formkasten auf, welche zusammen im geschlossenen Zustand Kavitäten zum Herstellen der Applikationsköpfe durch Giessen bilden. Pro Mascara-Bürste wird in den unteren Formkasten ein Docht aus Keramik oder Kunststoff eingelegt und nach dem Zusammenbringen des oberen mit dem unteren Formkasten wird ein weiches Material in die Kavitäten eingespritzt. Dazu weist das Werkzeug eine Pressplatte auf, welche mit dem oberen Formkasten zusammenwirkt, wobei vom von der Pressplatte und dem oberen Formkasten gebildeten Raum Zuführdurchlässe durch den oberen Formkasten hindurch in die Kavitäten führen. Material, welches unter Druck verflüssigt wird, wird zwischen die Pressplatte und den oberen Formkasten eingelegt. Das Material wird durch aufeinander zu bewegen der Pressplatte und der Formkasten verflüssigt und das flüssige Material wird durch die Verbindungsöffnungen hindurch in die Kavitäten hinein gedrückt.

JP2012-152928 A offenbart ein Verfahren zur Herstellung einer Interdentalbürste. Eine Kunststoffkomponente zum Formen der Borsten wird über einen Kern eingespritzt, wobei sich der Anspritzpunkt an der Spitze des Kerns befindet.

US2011/0041271 A1 offenbart eine Interdentalbürste, aufweisend einen eine Längsrichtung definierenden Borstentragstamm mit einem länglichen Tragkern, ein Borstenfeld mit vom Borstentragstamm abstehenden Borsten und ein den Tragkern mit einem Griff verbindendes Halselement, wobei der Griff, der Tragkern und das Halselement integral aus einer ersten Kunststoffkomponente aus Hartmaterial gespritzt sind, und wobei auf den Tragkern eine zweite Kunststoffkomponente aus Weichmaterial in Form einer integralen Schicht mit von dieser abstehenden Borsten aufgebracht ist, wobei die integrale Schicht aus Weichmaterial vorzugsweise bündig mit dem Halselement auf den Tragkern aufgebracht ist.

Es ist eine Aufgabe der vorliegenden Beschreibung ein besonders einfaches Spritzgussverfahren zur Herstellung einer Bürste, insbesondere einer Interdentalbürste, welche einen eine Längsrichtung definierenden Borstentragstamm mit einem länglichen Tragkern und ein Borstenfeld mit vom Borstentragstamm abstehenden Borsten aufweist, eine entsprechend hergestellte Bürste, insbesondere Interdentalbürste sowie eine Produktgruppe aus mehreren Bürsten vorzuschlagen.

Bei den Bürsten der Erfindung handelt es sich um Interdentalbürsten. Die Aufgabe der Erfindung wird mit einer Interdentalbürste gemäss Anspruch 1 gelöst.

Besonders bevorzugte Ausführungsformen sind in den abhängigen Ansprüchen angegeben.

Die Beschreibung umfasst ein Verfahren zur Herstellung einer Bürste, insbesondere einer Interdentalbürste, welche einen eine Längsrichtung definierenden Borstentragstamm mit einem länglichen Tragkern, ein Borstenfeld mit vom Borstentragstamm abstehenden Borsten und ein den Tragkern mit einem Griff verbindendes Halselement aufweist, mit folgenden Schritten: Spritzen des Griffs, des Halselements und des Tragkerns integral aus einer ersten Kunststoffkomponente, Einführen des Tragkerns in Längsrichtung durch eine Borstenfeldkavitätsöffnung eines Spritzgusswerkzeugs in eine Borstenfeldkavität, Fixieren des in die Borstenfeldkavität eingeführten Tragkerns zur Vermeidung einer Bewegung des Tragkerns in Längsrichtung, und Aufbringen einer zweiten Kunststoffkomponente von einem Anspritzpunkt des Spritzgusswerkzeug aus auf den Tragkern zur integralen Ausbildung einer Schicht auf dem Tragkern und der von dieser abstehenden Borsten; sowie eine Bürste, insbesondere Interdentalbürste, aufweisend einen eine Längsrichtung definierenden Borstentragstamm mit einem länglichen Tragkern, ein Borstenfeld mit vom Borstentragstamm abstehenden Borsten und ein den Tragkern mit einem Griff verbindendes Halselement, wobei der Griff, der Tragkern und das Halselement integral aus einer ersten Kunststoffkomponente gespritzt sind, und wobei auf den Tragkern eine zweite Kunststoffkomponente in Form einer integralen Schicht und der von dieser abstehenden Borsten aufgebracht ist. Die Beschreibung umfasst zudem eine Produktgruppe aufweisend mehrere Bürsten, insbesondere Interdentalbürsten, wobei die Griffe der benachbarten Bürsten jeweils über eine, vorzugsweise über zwei, Materialbrücken aus der ersten Kunststoffkomponente verbunden sind sowie eine Produktgruppe aufweisend mehrere Bürsten, insbesondere Interdentalbürsten, wobei die Griffe der benachbarten Bürsten jeweils über eine Materialbrücke aus der ersten Kunststoffkomponente und eine Materialbrücke aus der zweiten Kunststoffkomponente verbunden sind.

Eine Produktgruppe besteht aus drei bis acht aneinandergereihten Produkten vorzugsweise aus fünf bis sechs Produkten. Aus Gründen der Einfachheit wegen werden die Figuren jeweils nur mit fünf Produkten gezeigt.

Weiter umfasst die Beschreibung ein Verfahren zur Herstellung einer Bürste, insbesondere einer Interdentalbürste, welche einen eine Längsrichtung definierenden Borstentragstamm mit einem länglichen Tragkern, ein Borstenfeld mit vom Borstentragstamm abstehenden Borsten und ein den Tragkern mit einem Griff verbindendes Halselement aufweist, mit folgenden Schritten: Spritzen des Griffs, des Halselements und des Tragkerns integral aus einer ersten Kunststoffkomponente in einer ersten Spritzgiesskavität, Umlegen des gespritzten Teils in eine weitere Kavität eines Spritzgusswerkzeugs mit Borstenkavitäten Fixieren des in die Borstenfeldkavität eingeführten Teils zur Vermeidung einer Bewegung des Tragkerns in Längsrichtung, und Aufbringen einer zweiten Kunststoffkomponente von einem Anspritzpunkt des Spritzgusswerkzeug aus auf den Tragkern zur integralen Ausbildung einer Schicht auf dem Tragkern und der von dieser abstehenden Borsten.

Das Umlegen im Spritzgiesswerkzeug passiert vorzugsweise mit einer Transportleiste, die die mindestens teilweise gefertigten Produkte nach einer Hubbewegung aus der Kavität durch eine translatorische Verschiebung oder eine Rotation zu einer weiteren Kavität bewegt werden, wo sie mittels eines Hubs in der Kavität platziert werden.

Die Transportleiste ist vorzugsweise ein Teil der Kavität das heisst, dass die Transportleiste mindestens im ersten Spritzgiessvorgang einen Teil der formenden Geometrie bildet. Die Schnittstelle zwischen dem Produkt und dem Transportsystem kann beispielsweise im Griff oder im Hals oder als Kombination daraus angeordnet sein.

Die oftmals gewünschte Individualisierung des Produkts kann beispielsweise durch auswechselbare formgebende Teile im Griff oder im Hals erreicht werden. Beispielsweise können auf diesem Weg Schriftzüge oder andere Oberflächengeometrien geformt werden. Diese Elemente können sowohl in der Transportleiste als auch in der eigentlichen Kavität angeordnet sein.

Der Herstellprozess der genannten Produkte ist nach dem Spritzgiessen soweit abgeschlossen, dass verwendbare Produkte vorliegen. Dementsprechend kann das Produkt nach dem Spritzgiessen verpackt werden.

Die Verpackung der Produkte passiert vorzugsweise in einer Verpackung, die dem Endkonsumenten als Box vorliegt. Die Produkte sind darin liegend oder stehend direkt aneinander anliegend angeordnet.

Die Anbindung des Verpackungsprozesses kann inline d.h. verkettet oder offline in einem getrennten Schritt passieren. Beim Inline-Prozess ist das Spritzgiessen und das Verpacken gekoppelt. Die Produkte werden nicht aus der Maschine entfernt, bis sie komplett verpackt sind. Beim Offline-Prozess findet nach dem Spritzgiessen ein Lagern, Transportieren, etc. statt bevor verpackt wird.

Weiter ist es möglich, nach dem Spritzgiessen und vor dem Verpacken Zwischenschritte zu vollziehen. Beispielsweise ein Puffern oder ein bearbeiten des Produkts beispielsweise durch beschichten (sprayen, tunken, etc.).

Als erste Kunststoffkomponente, aus welcher regelmässig der Griff, der Tragkern und das Halteelement integral geformt sind, wird vorzugsweise ein Hartkunststoff verwendet und für zweite Kunststoffkomponente, aus welcher die Schicht bzw. die von dieser abstehenden Borsten gebildet werden, wird vorzugsweise eine Weichkomponente verwendet. Es besteht natürlich auch die Möglichkeit, dass z.B. im Bereich des Griffs eine weitere, dritte Komponente zur Erhöhung der Griffigkeit und zur Verbesserung der Ergonomie verwendet wird, oder aber auch im Bereich des Borstenfeldes in Form von weiteren Reinigungselementen oder anderen Funktionselementen. Beispiele für die in diesem Zusammenhang in Frage kommenden Materialien sind weiter unten im allgemeinen Beschreibungsteil aufgeführt.

Hinsichtlich der Produktgruppen wird angemerkt, dass grundsätzlich jedes Produkt in einer einzelnen Kavität hergestellt werden kann und jedes Produkt einzeln in der Verkaufseinheit untergebracht werden kann. Generell werden vorzugsweise mehrere Produkte nebeneinander angeordnet und die Verbindung der Produkte erfolgt über Materialbrücken im Griffbereich. Die Längsachsen der Bürsten sind vorzugsweise parallel angeordnet. In der Regel sind eine, zwei oder drei Materialbrücken vorgesehen (weitere sind allerdings denkbar). Diese verleihen den Produktgruppen vor allem Stabilität. Für den Gebrauch werden die Produkte zudem an den Materialbrücken getrennt. Da bei der Abtrennung der einzelnen Bürsten Kanten entstehen können, welche feine Gewebe, wie die Mundschleimhaut verletzen könnten, sind die Materialbrücken regelmässig im Griff angeordnet. Vorzugsweise sind die Materialbrücken jeweils aus derselben Komponente gefertigt. Es besteht auch die Möglichkeit, dass zwei unterschiedliche oder mehrere unterschiedliche Komponenten verwendet werden, wobei je eine pro Materialbrücke zum Einsatz kommt. Dies hängt allerdings von den gewählten Anspritzpunkten ab, wobei vorzugsweise pro Produktgruppen nur ein Anspritzpunkt für jede Komponente vorhanden ist. Weiter bevorzugt ist eine Materialbrücke eher im vorderen Teil und die andere eher im hinteren Teil des Griffes angeordnet, damit ein ausreichender Abstand zwischen den Materialbrücken gewährleistet ist. Die Materialbrücken können im Querschnitt rechteckig oder oval geformt sein, der Querschnitt hat vorzugsweise eine grössere und eine kleinere Länge und die grössere Länge des Querschnitts liegt vorzugsweise in Richtung der Längsachse des Produkts. Die Materialbrücken können des Weiteren Elemente zur Unterstützung beim Trennvorgang umfassen, wie z.B. Kerben oder Perforationen als Sollbruchstellen. Im Hinblick auf die Produktausgestaltung hat es sich als zweckmässig erwiesen, die gleichen Farben, die gleichen Materialien und die gleichen Geometrien für alle Produkte einer Produktgruppe vorzusehen. Allerdings besteht auch die Möglichkeit, die Produkte unterschiedlich auszugestalten, dabei können etwa die Formen der Reinigungsspitzen variieren. Es können verschiedene Durchmesser, verschiedene Längen der Reinigungsspitzen sowie verschiedene Gesamtlängen der Bürsten vorgesehen sein. Im Hinblick auf das Material kann eine Variation bei der zweiten Komponente (d.h. der Weichkomponente) vorgenommen werden.

In einer bevorzugten Ausführungsform der vorliegenden Erfindung ummantelt die zweite Kunststoffkomponente das Halselement teilweise.

Dies hängt jeweils von der Wahl der Anspritzpunkte ab, es sind jedoch auch Ausführungsformen denkbar, bei denen das Halselement vollständig von der zweiten Komponente ummantelt ist.

In einer weiteren bevorzugten Ausführungsform der Beschreibung werden der Tragkern, das Halselement und der Griff in einer von der Borstenfeldkavität separaten Kavität des Spritzgusswerkzeugs gespritzt.

Auf diese Weise kann der Herstellprozess effizienter gestaltet werden, als wenn hierfür ein komplett anderes Spritzgusswerkzeug verwendet werden muss.

In einer noch weiteren bevorzugten Ausführungsform der Beschreibung wird die Schicht derart ausgebildet, dass sie im Bereich des Borstenstamms eine Ummantelung des Tragkerns bildet.

Mittels einer solchen Ummantelung kann ein besonders guter und sicherer Sitz auf dem Tragkern erzielt werden. Insbesondere kann die zweite Komponente hinsichtlich ihres Schwindungsverhaltens auch so gewählt werden, dass sie auf den Tragkern aufschrumpft.

In einer anderen bevorzugten Ausführungsform der Beschreibung wird der Tragkern in der Borstenfeldkavität mittels von Borstenfeld-Werkzeugteilen, vorzugsweise mittels von in Richtung gegen das Innere der Borstenfeldkavität vorstehenden Stützelementen, an mehreren in Längsrichtung voneinander beabstandeten Stützstellen zentriert.

Die Stützstellen sind vorzugsweise zwischen den Borsten angeordnet.

Auf diese Weise kann wirksam verhindert werden, dass sich der Tragkern in radialer Richtung (d.h. weg von der Längsachse) bewegt und gegebenenfalls die Öffnungen für die zu bildenden Borsten verschliesst.

In einer wiederum anderen bevorzugten Ausführungsform der Beschreibung erfolgt das Fixieren des Tragkerns im Bereich des Griffs vorzugsweise an Stellen, an denen nur eine Kunststoffkomponente vorhanden ist.

Auf diese Weise soll verhindert werden, dass eine zweite, eventuell weichere Kunststoffkomponente durch die Fixiermittel beschädigt wird.

In einer weiteren bevorzugten Ausführungsform der Beschreibung bestehen die erste und zweite Kunststoffkomponente aus einem Hartmaterial, einem Hartmaterial und einem halbharten Material oder aber einem Hartmaterial und einem Weichmaterial.

Die jeweils gewählten Materialkombinationen hängen vom konkreten Anwendungsfall ab und die verwendeten Materialien werden weiter unten im allgemeinen Beschreibungsteil konkret angegeben. Für die Kombination hart-halbhart kommt beispielsweise eine Materialpaarung PE-PE infrage, wobei beispielsweise ein HDPE für die erste Materialkomponente verwendet wird und ein LLDPE für die zweite Materialkomponente verwendet wird. Für die Kombination hart-weich kommt beispielsweise eine Materialpaarung PP-TPE infrage.

Die verwendeten Materialien können wasserlöslich und essbar sein und so beispielsweise komplett oder teilweise aus Hydrocoloiden, Stärke, Gummiarabicum, Polyvinylalkohol, Polyox gebildet sein.

Weiter ist es möglich als weitere Komponente ein Material aufzusprayen oder das bestehende Produkt in einem Bad zu tauchen und so eine weitere Komponente beispielsweise als Beschichtung aufzubringen.

Mittel die als Beschichtung oder als Inhaltsstoff für die oben genannten Materialien verwendet werden können sind beispielsweise Farbe, Geschmack, Zahnreinigungsfluid, Zahnpasta, Wirkstoffe.

Weiter vorzugsweise weist der Tragkern einen geringeren Durchmesser auf als das Halselement.

Hierdurch kann sichergestellt werden, dass der Tragkern an seinem vorderen Ende nicht zu dick wird für die Verwendung im Interdentalbereich.

Bevorzugt wird ausserdem die Schicht bündig mit dem Halselement auf den Tragkern aufgespritzt bzw. aufgebracht.

Der bündige Abschluss der Schicht mit dem Halselement ist angenehmer in der Handhabung und bietet eine optisch vorteilhaftere Ausgestaltung.

In der vorliegenden Erfindung befindet sich der Anspritzpunkt der zweiten Kunststoffkomponente am vorderen, dem Halselement zugewandten, Ende des Griffs.

Grundsätzlich wird die Wahl des Anspritzpunktes bestimmt durch die Ausgestaltung des Produkts, das Schussgewicht und die Möglichkeiten der Verarbeitungsmaschine. Es können sowohl Heisskanal- als auch Kaltkanalsysteme zum Einsatz kommen. Bei klassischen Spritzgiesswerkzeugen mit einem Kaltkanalsystem ist das Angusssystem nicht thermisch vom Rest des Werkzeugs isoliert. Somit sind sowohl Werkzeug, als auch das darin befindliche Angusssystem auf Temperaturen deutlich unterhalb der Verarbeitungstemperaturen des Kunststoffes temperiert. Dadurch erstarrt der thermoplastische Kunststoff auch im Angusssystem während der Produktion eines Bauteils.

Bei einem Heisskanalsystem wird das Angusssystem thermisch vom Rest des Werkzeugs getrennt und separat beheizt, so dass die Kunststoffschmelze im Angusssystem permanent fliessfähig bleibt. Dadurch kommt es zu keiner Erstarrung des Kunststoffes im Angusssystem, es verbleibt kein Anguss am Bauteil. Weiterhin können durch die Heisskanalsysteme auch längere Fliesswege realisiert werden, weil der Druckverlust im Angusssystem nicht durch ein Abkühlen der Schmelze und der damit verbundenen Viskositätserhöhung vergrössert wird.

Aufgrund der oben genannten Wahl des Anspritzpunktes überdeckt die Kunststoffkomponente der Ummantelung am Griff einen kleinen Teil der Oberfläche, während sie auf der Rückseite der Interdentalbürste am Halselement einen wesentlichen Teil der Oberfläche einer Seite bedeckt, bevor sie die Oberfläche im Borstenfeldabschnitt schliesslich komplett bedeckt. Die aus der ersten Kunststoffkomponente gespritzten Teile (Griff, Halselement und Tragkern) weisen gegebenenfalls entsprechende Mulden bzw. Kanäle auf, welche das Fliessen der zweiten Kunststoffkomponente ermöglichen bzw. unterstützen. Es werden jeweils entsprechend gegengleiche Spritzgusswerkzeuge verwendet Die Spritzdüse ist bei dieser Ausführungsform in der Griff-Kavität angeordnet und es wird aufgrund des Fliessweges vorzugsweise ein Heisskanalsystem eingesetzt.

In einer wiederum anderen bevorzugten Ausführungsform der Beschreibung befindet der Anspritzpunkt der zweiten Kunststoffkomponente am freien Ende des Tragkerns oder an dem dem Halselement zugewandten Ende des Tragkerns.

Ist der Anspritzpunkt am freien Ende des Tragkerns angeordnet, wird für jede Bürste ein separater Anspritzpunkt vorgesehen sein. Hierbei wird in der Regel ein Kaltkanalsystem eingesetzt, wobei zum Trennen des Produkts vom Anguss zusätzliche Mittel im Werkzeug oder bei der Nachbearbeitung vorgesehen sind. Als Trennmittel kommen generell Stanzer oder Schneider in Betracht. Die Anspritzdüsen sind somit jeweils in der Borstenfeldkavität angeordnet und es können sowohl ein Tunnelanguss, als auch ein Filmanguss oder andere bekannte Angusstypen zum Einsatz kommen.

In einer nochmals anderen bevorzugten Ausführungsform der Beschreibung befindet sich der Anspritzpunkt der zweiten Kunststoffkomponente am hinteren, dem Halselement abgewandten, Ende des Griffs.

Hier ist die Spritzdüse wiederum in der Griffkavität angeordnet. Aufgrund des relativ langen Fliessweges kommt in der Regel ein Heisskanalsystem zum Einsatz. Die zweite Kunststoffkomponente überdeckt hier einen Grossteil der Oberfläche des Griffs sowie auf der Rückseite der Interdentalbürste am Halselement einen wesentlichen Teil der Oberfläche einer Seite, bevor sie wiederum die Oberfläche im Borstenfeldabschnitt komplett bedeckt.

Die zweite Kunststoffkomponente wird dabei in entsprechenden Mulden bzw. einem Loch im Griff aufgenommen, wo sie einen Abschnitt mit erhöhter Griffigkeit bildet.

Eine entsprechende Mulde im Griff kann mit einer Struktur versehen sein, wie etwa einer Struktur am Rand oder am Boden der Mulde. Die Form der Struktur kann Noppen, Rillen, Lamellen oder ähnliches aufweisen sowie Kombinationen davon. Es können eine oder mehrere Komponenten einander durchragen, zum Beispiel können harte Komponenten durch weiche Komponente hindurchragen.

Die Mulde kann mit einem Zweikomponenten- oder Dreikomponentenbelag zur weiteren Verbesserung der Griffigkeit und Ergonomie ausgestaltet sein.

Es können des Weiteren Übergänge vorgesehen sein, in Form von weichen Übergängen vom Griff her, oder aber hart abgesetzte Übergänge vom Griff her, wie etwa mit einer abgesetzten Vertiefung.

Es können grundsätzlich geschlossene oder offene Mulden vorgesehen sein, wobei in der geschlossenen Version der Rand die Mulde durchgehend ist und wobei in der offenen Version die Mulde mindestens auf einer Seite offen ist (zum Beispiel Führungen links und rechts in Richtung der Längsachse). Es ist auch denkbar, dass die Mulde vorne und hinten offen ist.

Im Hinblick auf Ausführungsformen mit Loch im Griff sind ebenfalls verschiedene Ausgestaltungen denkbar. Es können eines oder mehrere Löcher vorhanden sein, wobei zum Beispiel ein grosses Loch und mehrere kleine Löcher vorhanden sein können. Die Löcher sind vorzugsweise kreisförmig oder oval ausgestaltet, es sind allerdings auch N-eckige oder polygonförmige Löcher (zum Beispiel mit gerundeten Ecken) denkbar.

Des Weiteren sind ebenfalls Kombinationen von Mulden und Löchern möglich, wie etwa auch Löcher innerhalb einer Mulde.

Weiter vorzugsweise weist der Tragkern einen runden, dreieckförmigen oder trapezförmigen Querschnitt auf.

Die Querschnittsform des Tragkerns hängt in der Regel ab von der speziell gewählten Borstenfeldgeometrie. Der Tragkern kann weiterhin auf einer Seite (in der Regel der unteren Seite) gar nicht oder nur teilweise von der Ummantelung bzw. Schicht umgeben sein. Auf dieser Seite weist der Tragkern dann auch keine Borsten auf.

In einer anderen bevorzugten Ausführungsform der vorliegenden Erfindung weist der Tragkern einen geringeren Durchmesser auf als das Halselement, wobei sich der Tragkern in Richtung seines dem Halselement abgewandten Endes hin verjüngt.

Die sich verjüngende Ausgestaltung des Tragkerns sowie vorzugsweise auch des Borstenstammes stellen eine grössere Variabilität der Bürste sicher und tragen gegebenenfalls dazu bei, dass die Bürste leichter in den Interdentalbereich eingebracht werden kann.

In einer bevorzugten Ausführungsform der Beschreibung weist der Griff an seinem dem Halselement abgewandten Ende eine Einkerbung auf, welche vorzugsweise mit einer Umrandung aus einer Weichkomponente versehen ist.

Mit der Einkerbung kann die Bürste auf eine Haltevorrichtung oder aber ein Glas oder einen Becher aufgebracht werden. Die Umrandung mit der Weichkomponente kann die Griffigkeit für das Aufstecken erhöhen sowie einen Schutzgegen Verkratzen bzw. Beschädigungen bereitstellen.

Vorzugsweise stehen die Borsten in nicht-radialer Weise von der Längsachse des Tragkerns ab.

Die einzelnen Borsten bzw. Borstenreihen stehen vielmehr im Wesentlichen vertikal von der Längsachse des Tragkerns ab oder aber sie liegen horizontal innerhalb einer Ebene welche durch die Längsachse verläuft oder aber unterhalb der Längsachse verläuft. Auf diese Weise kann der Reinigungseffekt der Bürste an den kritischen Bereichen in den Zahnzwischenräumen verbessert werden.

Bevorzugt nehmen des Weiteren die Borsten in Richtung des dem Halselement abgewandten Endes des Borstenstamms in ihrer Länge ab.

Auch diese Massnahme dient der Verbesserung des Reinigungseffekts in den Zahnzwischenräumen, da sich die Bürste in ihrer Form besser anpassen kann.

In einer anderen bevorzugten Ausführungsform der Beschreibung stehen in einer Ebene unterhalb der Längsachse des Tragkerns zwei Borstenreihen im Wesentlichen horizontal von dem Tragkern ab.

In einer anderen bevorzugten Ausführungsform der Beschreibung sind auf der Oberseite des Tragkerns drei Borstenreihen angeordnet, welche in Richtung des dem Halselement abgewandten Endes des Borstenstamms zusammenlaufen und welche vorzugsweise im Wesentlichen vertikal von der Oberseite abstehen.

Durch diese beiden Massnahmen kann eine sich optimal ergänzende Borstenfeldgeometrie geschaffen werden, mit welcher die Zahnzwischenräume vollständig und gleichmässig bearbeitet werden können. Die jeweils nicht radiale Anordnung der Borstenreihen verstärkt den Reinigungseffekt gegenüber einer radialen Anordnung derselben.

In der vorliegenden Erfindung ist die zweite Kunststoffkomponente auf das vordere, dem Halselement zugewandte, Ende des Griffs aufgespritzt, wobei in einer weiteren bevorzugten Ausführungsform die zweite Kunststoffkomponente am Griff einen kleinen Teil der Oberfläche überdeckt, während sie auf der Rückseite am Halselement einen wesentlichen Teil der Oberfläche bedeckt und die Oberfläche des Tragkerns komplett, oder aber mit Ausnahme einer unteren Seite, bedeckt.

In einer wiederum anderen bevorzugten Ausführungsform der Beschreibung ist die zweite Kunststoffkomponente auf das vordere, dem Halselement abgewandte, Ende des Tragkerns aufgespritzt, wobei die zweite Kunststoffkomponente die Oberfläche des Tragkerns komplett, oder aber mit Ausnahme einer unteren Seite, bedeckt.

In einer bevorzugten Ausführungsform der Beschreibung sind auf der Oberseite des Tragkerns zwei Borstenreihen angeordnet, welche in Richtung des dem Halselement abgewandten Endes des Borstenstamms zusammenlaufen und welche vorzugsweise nach aussen geneigt von der Oberseite abstehen.

Auch hier laufen die beiden Borstenreihen in Richtung des freien Endes des Tragkerns zusammen und es nimmt die Länge der einzelnen Borsten in Richtung des freien Endes des Tragkerns ab. Diese Variante ist in der Herstellung noch etwas einfacher als die Variante mit den drei Borstenreihen auf der Oberseite des Tragkerns. Es ergibt sich weiterhin nochmal ein etwas abgewandelter Reinigungseffekt. Grundsätzlich ist allerdings die Anzahl der Borstenreihen beliebig wählbar, wobei eine Anzahl von zwei bis neun bevorzugt wird, sowie eine Anzahl von drei bis fünf noch weiter bevorzugt wird.

Der Winkel zwischen den einzelnen Borstenreihen beträgt maximal 180°, d.h. jeweils der Winkel zwischen den beiden am weitesten entfernten Borstenreihen. In einer anderen bevorzugten Ausführungsform liegt der Winkel zwischen 0 und 90°. Bei den in der Mitte (auf der Oberseite) angeordneten Reihen beträgt der Winkel ggf. zwischen 0 und 20°; bei den am Rand angeordneten Reihen beträgt der Winkel bevorzugt zwischen 60 und 85°.

Als Kombinationsmöglichkeiten mit dem vorliegenden Produkt eignen sich insbesondere weitere Reinigungs- bzw. Polierelemente sowie weitere funktionale Elemente wie z.B. Flosser (auch Zahnseidenbogen oder Zahngeige genannt), Zahnstocher, Zungenreiniger. Am Tragkern können zudem in Lamellen aus der zweiten Materialkomponente angeordnet sein.

Die Lamellen können in verschiedenen Formen im Borstenfeld integriert sein. Beispielsweise können die Lamellen spiralförmig rund um den Tragkern laufen, sie können Tellerförmig um den Tragkern angeordnet sein in dieser Weise können auch mehrere Lamellen hintereinander angeordnet sein. Weiter ist es möglich Längslamellen anzuordnen, die sich entlang der Längsachse erstrecken. Lamellen können generell geradlinig oder auch wellenförmig ausgestaltet sein, die Kontur kann geschlossen oder offen sein. Weiter können die Lamellen ein Höhenprofil ausbilden.

Die Lamellen können mit den anderen genannten Reinigungselementen in Kombination angeordnet sein, insbesondere können die Lamellen zwischen den Borsten angeordnet sein.

Im Hinblick auf die Dimension der Bürste wird eine Länge von 35 bis 70 mm bevorzugt und eine Länge von 40 bis 55 mm am meisten bevorzugt. Die Höhe (inklusive des Borstenfelds) beträgt bevorzugt zwischen 0.8 bis 2.8 mm und am meisten bevorzugt zwischen 1 und 2 mm. Die Breite der Bürste beträgt vorzugsweise zwischen 3 und 12 mm und am meisten bevorzugt zwischen 5 und 8 mm.

In einer noch weiteren bevorzugten Ausführungsform der Beschreibung ist die zweite Kunststoffkomponente auf das hintere, dem Halselement abgewandte, Ende des Griffs aufgespritzt, wobei die zweite Kunststoffkomponente am Griff einen grossen Teil der Oberfläche überdeckt, während sie auf der Rückseite am Halselement einen wesentlichen Teil der Oberfläche bedeckt und die Oberfläche des Tragkerns komplett, oder aber mit Ausnahme einer unteren Seite, bedeckt.

Weiterhin ist vorgesehen eine Bürste, insbesondere Interdentalbürste, aufweisend einen Griff, ein Halselement und einen Tragkern, wobei das Halselement den Griff und den Tragkern verbindet und wobei ein Borstenfeld auf den Tragkern aufgebracht ist, und wobei der Griff an seinem dem Halsteil abgewandten Ende eine Einkerbung aufweist.

Bevorzugt wir die Einkerbung von zwei seitlichen Flanken des Griffs umgeben, welche weiter vorzugsweise flexibel bzw. federnd in Form von Klemmarmen ausgestaltet sind. Die Flexibilität der beiden Klemmarme kann durch die Geometrie derselben gestaltet werden und/oder durch die gewählten Kunststoffmaterialien bzw. Materialkombinationen.

Der Grundkörper, welcher jedenfalls den Griff und das Halselement umfasst (diese können allerdings auch integral mit dem Tragkern gespritzt werden) wird regelmässig aus einer Kunststoffkomponente, vorzugsweise einem Hartmaterial, gebildet.

Die Einkerbung ist bevorzugt von einer Umrandung aus einer Weichkomponente umgeben, um einen besseren Halt zu gewährleisten. Die Einkerbung kann jedoch auch membranartig mit einer Weichkomponenten-Schicht, welche sich lippenartig um den jeweils eingeschobenen Gegenstand formt, ausgestaltet sein.

Darüber hinaus kann die Oberfläche im Bereich der Einkerbung so beschaffen sein, dass dieser Bereich eine Mulde für das Halten der Bürste beinhaltet. Weiterhin können im Bereich der Einkerbung Oberflächenelemente, wie etwa Lamellen, Noppen o.ä. angeordnet sein, um die Griffigkeit weiter zu verbessern.

Das Funktionselement Einkerbung kann neben der genannten und beschriebenen Anwendung auf Interdentalbürsten generell in manuellen Mundpflegegeräten eingesetzt werden. Beispielsweise auch auf anderen Interdentalreinigungsgeräten, Zahnbürsten, Flossern, etc.

In weiterer Ausgestaltung wird eine Bürste, insbesondere Interdentalbürste, welche einen eine Längsrichtung definierenden Borstentragstamm mit einem in Längsrichtung verlaufenden Tragkern und ein Borstenfeld mit vom Borstentragstamm abstehenden Borsten aufweist, im Spritzgussverfahren hergestellt.

Dazu wird eine Borstenfeldkavität, welche der Herstellung des Borstentragstamms und der Borsten dient, geschlossen. Dies geschieht durch Bewegen der die Borstenfeldkavität begrenzende Werkzeugteile des Spritzgusswerkzeuges in den geschlossenen Zustand. Die so geschlossene Borstenfeldkavität weist eine Borstenfeldkavitätsöffnung auf.

Ein mit seiner Längserstreckung in Längsrichtung angeordneter Tragkern wird in Längsrichtung durch die Borstenfeldkavitätsöffnung in die geschlossene Borstenkavität eingeführt. Vorzugsweise steht der eingeführte Tragkern mit einem Abschnitt aus der Borstenfeldkavität über die Borstenfeldkavitätsöffnung vor.

Der in die geschlossene Borstenfeldkavität eingeführte Tragkern wird derart fixiert, dass er sich nicht in Längsrichtung bewegen, d.h. verschieben kann.

Durch nachfolgendes Einbringen von Kunststoff in die Borstenfeldkavität wird eine Schicht Kunststoff an den Tragkern angespritzt und werden gleichzeitig integral mit der Schicht die Borsten hergestellt.

Das Fixieren des Tragkerns verhindert, dass er sich infolge der auf ihn durch den flüssigen Kunststoff ausgeübten Kraft in Längsrichtung verschieben kann.

Das Einführen des Tragkerns in die bereits geschlossene Borstenfeldkavität hat den Vorteil, dass sowohl eine Beschädigung des Spritzgusswerkzeugs als auch des Tragkerns beim Schliessen der Borstenfeldkavität vermieden wird. Das Einlegen des Tragkerns in die geöffnete Borstenfeldkavität könnte, bei bereits kleinen Verkrümmungen des Tragkerns, beim Schliessen der Borstenfeldkavität dazu führen, dass er im Spritzgusswerkzeug eingeklemmt wird und dieses dadurch beschädigt wird.

Bevorzugt wird ein Spritzgusswerkzeug mit wenigstens zwei Borstenfeld-Werkzeugteilen bereitgestellt, welche im geschlossenen Zustand die - geschlossene - Borstenfeldkavität begrenzen. Die Borstenfeldkavität weist an einer Stirnseite eine Borstenfeldkavitätsöffnung auf. Diese befindet sich in Längsrichtung bei einem Ende der Borstenfeldkavität.

Nachdem die Borstenfeld-Werkzeugteile in den geschlossenen Zustand verbracht worden sind, wird der Tragkern in Längsrichtung durch die Borstenfeldkavitätsöffnung in die Borstenfeldkavität eingeführt und mittels eines Fixierelements fixiert. Durch einspritzen von Kunststoff in die Borstenfeldkavität werden am Tragkern die Schicht und gleichzeitig die Borsten ausgebildet.

Bevorzugt wird die Schicht als Ummantelung des Tragkerns derart ausgebildet, dass der Tragkern bei Anwendung der Interdentalbürste nicht mit den Zähnen in Berührung kommen kann. Dies bietet die Möglichkeit, dass als Tragkern ein metallischer Draht, beispielsweise aus Federstahl, verwendet werden kann, wobei die Gefahr eines galvanischen Schocks unterbunden ist.

Bevorzugt wird der Kunststoff so eingespritzt, dass er durch die Borstenfeldkavitätsöffnung in die Borstenfeldkavität fliesst.

Das in der Borstenfeldkavität liegende Ende des Tragkerns wird besonders bevorzugt von Kunststoff vollständig umspritzt, so dass die Ummantelung eine Art Kappe um den Tragkern beim freien Ende des Borstentragstamms bildet.

In einer bevorzugten Ausführungsform wird der Tragkern - in Längsrichtung - ausserhalb des zu bildenden Borstenfeldes mittels des Fixierelements gehalten und wird der Kunststoff derart eingespritzt, dass er durch die Borstenfeldkavitätsöffnung in die Borstenfeldkavität fliesst. Der Tragkern wird somit stromaufwärts vor den zu spritzenden Borsten gehalten, was ermöglicht, dass sich der Tragkern über wenigstens annähernd die gesamte Länge der Borstenfeldkavität erstrecken kann, ohne dass die Gefahr besteht, dass er durch den in die Borstenfeldkavität hineinfliessenden Kunststoff gebogen wird.

Zu diesem Zweck kann die Borstenfeldkavität einen Borstenfeldabschnitt und, in Richtung zur Borstenfeldkavitätsöffnung, an diesen unmittelbar anschliessend einen Halsabschnitt aufweisen.

Bevorzugt wird der Tragkern nicht komplett starr fixiert, sondern die Fixierung geschieht an einem Abschnitt, insbesondere Endabschnitt des Tragkerns, während der nicht fixierte Teil sich radial in der Borstenfeldkavität bewegen kann. Dadurch ist die Fixierung lediglich axial sichergestellt.

Im Borstenfeldabschnitt wird jener Teil der Interdentalbürste hergestellt, welcher die gespritzten Borsten aufweist und welcher dazu bestimmt ist, bei der Anwendung der Interdentalbürste in die Interdentalräume eingeführt zu werden.

Der Halsabschnitt kann somit gegenüber dem Durchmesser für den Borstentragstamm im Borstenfeldabschnitt grösser ausgebildet werden.

Bevorzugt weist das Spritzgusswerkzeug jedoch mindestens ein Halswerkzeugteil auf und wird der Tragkern im Bereich des Halswerkzeugteils mittels des Fixierelements während dem Einspritzen des Kunststoffs gehalten. Das Halswerkzeugteil befindet sich dabei an der Seite des Borstenfeld-Werkzeugteils, auf welcher sich die Borstenfeldkavitätsöffnung befindet.

In einer weiteren bevorzugten Ausführungsform weist das Spritzgusswerkzeug ein Kappenwerkzeugteil mit einer Kappenkavität auf, welche der Ausbildung der Schicht, beispielsweise der Ummantelung am freien Ende des Borstentragstamms, dient.

Bevorzugt liegt das Kappenwerkzeugteil direkt am Borstenfeld-Werkzeugteil an.

Als erster Werkzeugteil werden hier die Kappenwerkzeugteile zusammen mit den Borstenfeld-Werkzeugteilen und gegebenenfalls den Halswerkzeugteilen und Fixierelement bezeichnet.

Bevorzugt bilden zwei Halswerkzeugteile in geschlossenem Zustand eine Halskavität, deren Halskavitätsöffnung, beim Einspritzen des Kunststoffs, an der Borstenfeldkavitätsöffnung anliegend angeordnet ist. Dies ermöglicht das gleichzeitige und integrale Herstellen der Schicht beziehungsweise Ummantelung und der Borsten zusammen mit einem Halsmantel beziehungsweise der Halsschicht um den Tragkern.

In bevorzugter Weise wird das Fixierelement von zwei Klemmstempeln gebildet, welche bezüglich der Längsrichtung einander diametral gegenüber liegen und aus einer Ruhestellung aufeinander zu in eine Klemmstellung bewegbar sind, um in Klemmstellung den Tragkern klemmend zu halten. Bevorzugt verläuft die Bewegungsrichtung der Klemmstempel entlang einer gemeinsamen Geraden, welche rechtwinklig zur Längsrichtung verläuft. Die Bewegungsrichtung ist hierbei vorzugsweise parallel zur Öffnungsrichtung der Griffkavität und der Halskavität.

Bevorzugt greifen die Klemmstempel in ihrer Klemmstellung in das Innere der Halskavität und werden beim Spritzgiessen von Kunststoff umflossen. Bevorzugt dichten die Klemmstempel dabei gegenüber dem Tragkern so, dass der Kunststoff nicht in den Klemmbereich fliessen kann, wenn dieser die Stempelpaarung umfliesst.

Dies führt dazu, dass die Kunststoffkomponente der Interdentalbürste durch die Klemmstempel erzeugte Ausnehmungen, beziehungsweise einen dadurch erzeugten Durchlass aufweist, durch welchen hindurch der Tragkern verläuft.

In bevorzugter Weise wird der Tragkern von den in die Klemmstellung bewegten Klemmstempeln in Umfangsrichtung vollständig umschlossen, so dass ein betreffender Fixierabschnitt des Tragkerns vom Kunststoff frei bleibt. Im dadurch gebildeten Durchlass der Kunststoffkomponente kommt dadurch der Tragkern - ohne Ummantelung durch den Kunststoff - frei zu liegen. Vorzugsweise liegt der Tragkern so tief im Durchlass beziehungsweise Ausnehmung, dass die Gefahr eines galvanischen Schocks bei Zahnberührung gebannt ist, da die Zähne ihn nicht berühren können.

Um eine besonders sichere Fixierung des Tragkerns zu erreichen, weisen bevorzugt die Klemmstempel in den einander zugewandten Endbereichen Zähne beziehungsweise Zahnlücken auf, welche in Klemmstellung miteinander in Eingriff gelangen.

Bevorzugt wird der Tragkern in der Borstenfeldkavität - im Borstenfeldabschnitt - mittels der Borstenfeld-Werkzeugteile an mehreren in Längsrichtung voneinander beabstandeten Stützstellen zentriert. Dazu weisen die Borstenfeld-Werkzeugteile vorzugsweise in Richtung gegen das Innere der Borstenfeldkavität vorstehende Stützelemente auf.

Bevorzugt stehen die Stützelemente zwischen 0.08 mm und 0.16 mm, besonders bevorzugt zwischen 0.1 mm bis 0.14 mm, gegenüber der Mantelfläche des den Borstentragstamm definierenden Teils der Borstenfeldkavität vor.

Weiter sind die Stützelemente bezüglich des Tragkerns bevorzugt derart ausgebildet, dass in radialer Richtung gemessen zwischen den Stützelementen und dem zentrischen beziehungsweise zentrisch gedachten Borstentragstamm ein Spalt von 0.01 mm bis 0.03 mm, besonders bevorzugt zwischen 0.015 mm und 0.025 mm, verbleibt. Dadurch lässt sich der Tragkern in Längsrichtung in die Borstenfeldkavität und zwischen die Stützelemente einführen, ohne dass eine Hinderung oder Verbiegung auftritt. Weiter ermöglicht dies beim Einspritzen des Kunststoffs die Bildung einer dünnen Haut aus Kunststoff auf dem Tragkern bei den Stützelementen.

In Längsrichtung gesehen wird der Tragkern mittels der Stützelemente bevorzugt aufeinander folgend winkelversetzt abgestützt. Der Versatz beträgt vorzugsweise 90°. Dadurch sind die Stützelemente in Längsrichtung voneinander beabstandet und es liegen keine Stützelemente in radialer Richtung einander gegenüber. Der Kunststoff kann somit praktisch ungehindert von der Borstenfeldkavitätsöffnung durch die Borstenfeldkavität fliessen, da er im Querschnitt an maximal einer Stelle eingeschränkt ist. Auf diese Weise bilden die Stützelemente Stützstellen aus, die spiralförmig um den Borstentragstamm ausgebildet sind.

Bevorzugt sind die Stützstellen derart angeordnet, dass der Abstand zwischen zwei Stützstellen auf derselben Seite zwischen 4- und 16-mal vorzugsweise 4-mal einen Borstenabstand beträgt.

Die letzte Stützstelle gegen das freie Ende des Tragkerns hin befindet sich vorzugsweise direkt nach der letzten Borstenebene oder direkt vor der letzten Borstenebene.

Die Stützstellen sind vorzugsweise regelmässig angeordnet. Es ist jedoch auch möglich, dass der Abstand zwischen den Stützstellen in Längsrichtung nicht immer derselbe ist.

Die Stützelemente sind über das gesamte Borstenfeld vorzugsweise identisch ausgestaltet. Ihre Anzahl wird durch die Länge des Borstentragstammes und dem Abstand zwischen den Stützstellen vorgegeben.

Die Stützstellenbeziehungsweise Stützelemente sind derart angeordnet, dass die Borstenlöcher in der Borstenfeldkavität nicht durch den Tragkern verschlossen werden können und somit das Ausbilden aller Borsten gesichert ist

Unter Borstenlöcher seien diejenigen Teile der Borstenfeldkavität verstanden, welche von der den Borstentragstamm bestimmenden Mantelfläche ausgehen und der Formung der Borsten dienen.

In bevorzugter Weise ist der Tragkern durch einen Metalldraht, vorzugsweise aus einem rostfreien beziehungsweise rostbeständigen Federstahl, gebildet.

Am meisten bevorzugt wird ein Stahl 1.4310. Die Streckgrenze des metallischen Drahts sollte grösser sein als 2000 N/mm2. Dies gewährleistet ein gutes Rückstellmoment beim Biegen des Borstentragstamms im Anwendungsfall und verhindert ein Brechen des Tragkerns bei mehrfacher Biegung.

Alternativ kann der Tragkern auch aus Kunststoff, Keramik, oder Karbonverbundfasern bestehen.

Kunststofftragkerne können mittels Spritzguss oder Extrusion hergestellt sein. Vorzugsweise wird ein verstärkter Kunststoff eingesetzt um die nötige Steifheit und Härte zu erreichen. Zur Verstärkung des Kunststoffes können beispielsweise Glasfasern oder Glaskugeln eingesetzt werden.

Der Spritzguss- oder Extrusionsprozess für einen Kunststofftragkern wird dem Spritzgussprozess für das Borstenfeld vorgeschaltet und kann separat oder im gleichen Spritzgusswerkzeug integriert sein (zwei oder Mehrkomponentenwerkzeug) . Der Tragkern aus Kunststoff kann eine von einem Draht abweichende Form haben und einen wesentlichen Anteil des Griffteils und allenfalls deren Oberfläche definieren.

In bevorzugter Weise wird mittels des Kunststoffs beim Spritzgiessen des Borstenfeldes auch ein Griffteil der Interdentalbürste hergestellt.

Dabei wird der Griffteil in einem Griff-Werkzeugteil gespritzt, dieses wird hier auch als zweites Werkzeugteil bezeichnet.

Vorzugsweise weist zum oben genannten Zweck das Spritzgusswerkzeug zwei Griff-Werkzeugteile auf, welche in Schliessstellung eine Griffkavität mit einer stirnseitigen Griffkavitätsöffnung bilden (zweites Werkzeugteil). Die in den geschlossenen Zustand bewegten Borstenfeld-Werkzeugteile werden zusammen mit dem in die Borstenfeldkavität eingeführten und mittels des Fixierelements gehaltenen Tragkern zu den Griff-Werkzeugteilen bewegt und zwar derart, dass die Stirnseiten der Borstenfeld-Werkzeugteile (beziehungsweise Hals-Werkzeugteile) und Griff-Werkzeugteile aneinander anliegen und die Borstenfeldkavitätsöffnung beziehungsweise weitere Halskavitätsöffnung bei der Griffkavitätsöffnung liegt.

Die Borstenfeldkavität gegebenenfalls mit der Kappenkavität und die Griffkavität, gegebenenfalls zusammen mit der Halskavität, bilden somit gemeinsam eine Spritzkavität für die gesamte Kunststoffkomponente der Interdentalbürste.

Diese Ausführungsform ermöglicht das Einspritzen des Kunststoffs in die Griffkavität. Er fliesst dann durch die beieinander liegenden Griffkavitätsöffnung und Borstenfeldkavitätsöffnung unter Zwischenschaltung der Halskavität, beziehungsweise mit den Halskavitätsöffnungen, in die Borstenfeldkavität hinein. Ein Anspritzpunkt im Bereich der Borstenfeldkavität kann dadurch vermieden werden.

Es ist auch möglich, den Kunststoff über einen entsprechenden Anspritzpunkt zur Herstellung der Schicht beziehungsweise Ummantelung und der Borsten direkt in die Borstenfeldkavität einzuspritzen.

In diesem Fall kann die Borstenfeldkavitätsöffnung als Abschluss der Borstenfeldkavität dienen, so dass ein über die Borstenkavitätsöffnung vorstehender Abschnitt des Tragkerns nicht von Kunststoff umspritzt wird. Dies ermöglicht die Herstellung von Interdentalbürstenköpfen, welche in bekannter Art und Weise an einem separaten Griff befestigbar sind.

Entsprechend ist es auch möglich, dass die weitere Halskavitätsöffnung den Abschluss der Spritzkavität bildet und der Tragkern durch diese Öffnung vorsteht, so dass der vorstehende Abschnitt nicht von Kunststoff umspritzt wird.

Die Bürste, insbesondere Interdentalbürste, welche in Übereinstimmung mit dem Verfahren gemäss der weiteren Ausgestaltung hergestellt ist, ob sie einen Griffteil oder keinen Griffteil aufweist, besitzt einen die Längsrichtung definierenden Borstentragstamm mit einem länglichen, in Längsrichtung verlaufenden Tragkern und Borsten, die vom Borstentragstamm abstehen. Am Tragkern ist mittels Kunststoff eine Schicht angespritzt oder er ist mittels des Kunststoffs umspritzt, wobei der Kunststoff die Schicht beziehungsweise eine Ummantelung des Tragkerns und die Borsten integral ausbildet.

Bevorzugt liegt ein Fixierabschnitt des Tragkerns mindestens partiell frei; an der frei liegenden Stelle ist der Tragkern vom Kunststoff nicht überdeckt. Dieser Fixierabschnitt befindet sich bevorzugt ausserhalb des Bereichs, in welchem sich die Borsten befinden.

Bevorzugt liegt der Tragkern an Stützstellen partiell frei oder ist bei den Stützstellen nur von einem Kunststofffilm überzogen, welcher verglichen mit den übrigen Bereichen des Kunststoffs der Ummantelung dünn ist. Es sei erwähnt, dass diese Stützstellen durch die weiter oben dargelegten Stützelemente definiert sind.

Wird bei einer Interdentalbürste ein Tragkern aus elektrisch leitendem Material, beziehungsweise ein Metalldraht, verwendet, sind die frei liegenden Stellen derart angeordnet, dass der Tragkern nicht mit den Zähnen in Berührung kommen kann.

Bevorzugt stehen die Borsten vom Borstentragstamm in radialer Richtung ab.

Weiter bevorzugt sind die Borsten in in Längsrichtung verlaufenden sowie in Umfangsrichtung gleichmässig verteilten Borstenreihen angeordnet. Weiter sind die Borsten vorzugsweise und zusätzlich in rechtwinklig zur Längsrichtung verlaufenden und in Längsrichtung voneinander beabstandeten Borstenebenen angeordnet. Jede Borste einer Borstenreihe befindet sich dann auch in einer Borstenebene.

Bevorzugt befinden sich die Stützstellen zwischen jeweils aufeinander folgenden Borstenebenen.

An dieser Stelle sei erwähnt, dass selbstverständlich über die oben genannte Anordnung der Borsten auch die entsprechende Ausbildungsform der Borstenfeldkavität definiert ist.

Das Spritzgusswerkzeug weist wenigstens zwei Borstenfeld-Werkzeugteile auf, welche aus einem geöffneten Zustand in einen geschlossenen Zustand verbringbar sind. Im geschlossenen Zustand begrenzen die Borstenfeld-Werkzeugteile eine Borstenfeldkavität zur Herstellung des Borstentragstamms und der Borsten der Bürste, insbesondere der Interdentalbürste durch Spritzgiessen des Kunststoffs. Im geschlossenen Zustand der Borstenfeld-Werkzeugteile weist die Borstenfeldkavität an einer Stirnseite - und somit an einer Stirnseite der Borstenfeld-Werkzeugteile - eine Borstenfeldkavitätsöffnung auf. Durch diese ist jeweils ein Tragkern in Längsrichtung in die Borstenfeldkavität einführbar. Weiter ist ein Fixierelement vorhanden, welches dem Fixieren des in die Borstenfeldkavität eingeführten Tragkerns dient.

Je nach Anordnung der Borsten kann es notwendig sein, mehr als zwei Borstenfeld-Werkzeugteile, welche im geschlossenen Zustand die Borstenfeldkavität bilden, vorzusehen. Dadurch kann eine Zwangsentformung vermieden werden.

Bevorzugt weist das Spritzgusswerkzeug zwei Griff-Werkzeugteile auf, welche von einer Offenstellung in eine Schliessstellung verbringbar sind. In Schliessstellung begrenzen die Griff-Werkzeugteile eine Griffkavität mit einer Griffkavitätsöffnung, wobei diese Griffkavität dem Spritzgiessen eines Griffteils der Bürste, insbesondere der Interdentalbürste dient. Die in den geschlossenem Zustand bewegten Borstenfeld-Werkzeugteile, zusammen mit dem in die Borstenfeldkavität eingefügten und vorzugsweise bereits mit dem Fixierelement fixierten Tragkern, sind zu den Griff-Werkzeugteilen verbringbar und zwar derart, dass die Borstenfeldkavitätsöffnung und die Griffkavitätsöffnung miteinander verbunden sind und die Borstenfeldkavität zusammen mit der Griffkavität, gegebenenfalls mit Halskavität, eine Spritzkavität ausbilden.

Bevorzugt mündet ein Heisskanal zum Zuführen des verflüssigten Kunststoffs in die Spritzkavität in die Griffkavität. Der dadurch gebildete Anspritzpunkt liegt vorzugsweise im Griff der Interdentalbürste.

Die Borstenfeld-Werkzeugteile können mehr als eine Borstenfeldkavität mit jeweils einer Borstenfeldkavitätsöffnung begrenzen. Dies insbesondere dann, wenn zwei zusammen wirkende Borstenfeld-Werkzeugteile ausreichen.

Als Tragkern wird vorzugsweise ein Draht, insbesondere ein Stahldraht eingesetzt. Der Durchmesser des Tragkerns beträgt zwischen 0,1 mm und 0,4 mm, vorzugsweise zwischen 0,15 mm und 0,25 mm. Die Länge des Tragkerns beträgt, abhängig von der Länge des Borstentragstamms, zwischen 5 mm bis 25 mm, vorzugsweise 13 mm bis 20 mm.

Die Länge des Tragkerns ist vorzugsweise so gewählt, dass der Tragkern da endet, wo die kappenartige Verlängerung des Borstentragstamms ansetzt. Es ist aber auch möglich, den Tragkern so lange zu gestalten, dass eine gleichmässige Oberflächenschicht über dem gesamten Tragkern gebildet wird.

Der Tragkern ist vorzugsweise als gerader Zylinder ausgebildet. Dabei ist der Querschnitt vorzugsweise rund, es ist aber auch möglich den Querschnitt als regelmässiges n-Eck zu gestalten oder ihm ein T- oder doppel-T Profil zu geben oder eine andere geschlossene Kontur als Querschnitt zu definieren. Wichtig ist, dass der Tragkern ohne Probleme in die geschlossene Borstenfeldkavität eingeführt werden kann.

Grundsätzlich kann der Tragkern auch in nicht gerader sondern gebogener Form realisiert werden, solange er in die geschlossene Borstenfeldkavität eingeführt werden kann. Beispielsweise eine Bananenform wäre möglich. Da das Einführen des Tragkerns aber schwieriger wird, ist es einfacher, allfällige Krümmungen des Borstentragstamms nach dem Spritzgiessen einzubringen.

Im Bereich der Fixierung des Tragkerns ist es auch möglich, dem Tragkern eine Struktur zu geben, welche die Fixierung verbessert.

Beispielsweise eine Schlangenform oder eine Helix, kurz Formen, die das Klemmen des Tragkerns im Zusammenspiel mit dem allenfalls angepassten Fixierelement verbessern.

Die Ummantelung ist derart ausgebildet, dass sie kappenartig das freie Ende des Tragkerns überdeckt. So ist der bevorzugt verwendete Stahldraht nicht an der Oberfläche.

Bevorzugt steht der Tragkern und somit der Draht 3 mm bis 12 mm, vorzugweise 4 mm bis 6 mm, über dem Borstentragstamm in Richtung Griff vor. Dies bevorzugt in den Halsabschnitt hinein.

Auf der dem Borstentragstamm abgewandten Seite des Fixierelements (nach dem Fixierelement) beträgt die Länge des Tragkerns beziehungsweise Stahldrahts 0,5 mm bis 3 mm, vorzugsweise 1 mm bis 2 mm.

Für den Tragkern kann neben dem bereits genannten Metall auch Kunststoff, beispielsweise PA oder POM, oder können Materialen wie Keflar verwendet werden. Generell sind Materialien geeignet, welche ein gutes Rückstellmoment gewährleisten und bei vielfachem Biegen nicht brechen.

Der Tragkern kann eine spezielle Oberflächenstruktur oder Oberflächenbehandlung aufweisen.

Eine glatte Oberfläche ist gleitgünstig und kann negativen Einfluss ausüben, da je nach Materialkombination der Tragkern aus der Ummantelung ausbrechen kann, weil eine Relativbewegung zwischen den beiden Elementen möglich ist. Wird die Oberfläche beispielsweise aufgeraut, so kann die Haftung zwischen Kunststoff und Tragkernmaterial verbessert werden. Die rauhe Struktur kann beispielsweise durch Ätzen, Einbringen von Hicken oder Struktur generell verbessert werden.

Um eine Rauigkeit zu erreichen ist es auch möglich, die Oberfläche des Tragkerns entsprechend zu beschichten. Dazu eignen sich beispielsweise Lacke, Haftvermittler oder Primer. Wichtig ist hierbei, dass die Oberflächenbeschichtung nicht durch den Spritzdruck weggedrückt wird oder aufgrund der Hitze im Verfahren beschädigt wird.

Die Dicke der Ummantelung (ausserhalb dem Bereich der Borsten und bezüglich der Längsrichtung in radialer Richtung gemessen) beträgt zwischen 0,05 mm bis 0.3 mm, vorzugsweise 0.1 mm bis 0.2 mm.

Bevorzugt beträgt der Durchmesser des Borstentragstamms d.h. Durchmesser ohne Borsten, 0,2 mm bis 1,5 mm, bevorzugt 0,35 mm bis 0,9 mm.

Der Borstentragstamm weist bevorzugt eine Länge zwischen 6 mm bis 16 mm, besonders bevorzugt zwischen 9 mm und 13 mm auf.

Besonders bevorzugt weist der Borstentragstamm eine konische Mantelfläche auf. Beim freien Ende des Tragkerns beträgt der Durchmesser vorzugsweise 0,35 mm bis 0,65 mm, beim griffseitigen Ende des Borstentragstamms vorzugsweise 0,65 mm bis 0,85 mm.

Die Borsten weisen, gemessen von der Ummantelung bis zum freien Ende, bevorzugt eine Länge zwischen 0,2 mm bis 5 mm, besonders bevorzugt zwischen 0,5 mm bis 3 mm auf.

Das Verhältnis von Borstendurchmesser zum Durchmesser des Tragkerns beträgt von 1:8 bis 3:1 vorzugsweise von 1:2 bis 3:4.

Das Verhältnis des Borstendurchmessers zum Durchmesser des Borstentragstamms beträgt 1:30 bis 3:2 vorzugsweise 1:6 bis 1:3.

Der vom Borstenfeld geschaffene Mantel (an den Enden der Borsten) kann verschiedenste Formen einnehmen. Beispielsweise können die Borsten einen geraden Kreiszylinder oder einen Zylinder mit dreieckigem Querschnitt (Tännchenform) bilden. Weiter sind auch Formen möglich, bei denen sich der Querschnitt über die Länge verändert oder dieser an einer Stelle nicht regelmässig ist. So können wellenartige oder konische Formen gestaltet werden. Formen wie sie bei eingedrehten Bürsten erreicht werden können, können auf diese Weise ebenfalls realisiert werden, vom Komplexitätsgrad her sind mehr Möglichkeiten gegeben, da lediglich das Spritzgusswerkzeug die Grenzen setzt.

Der Durchmesser der Borsten beträgt bevorzugt 0,05 mm bis 0,3 mm, besonders bevorzugt 0,1 mm bis 0,2 mm - gemessen beim Borstenstamm, welcher am freien Ende bevorzugt abgerundet ausgebildet ist.

Die Borsten sind bevorzugt in 2 bis 10, besonders bevorzugt 4 bis 8, insbesondere 6 Borstenreihen angeordnet, welche in Längsrichtung verlaufen und in Umfangsrichtung gleichmässig verteilt sind.

Weiter sind die Borsten bevorzugt in Ebenen, den sogenannten Borstenebenen, angeordnet, welche rechtwinklig zur Längsrichtung verlaufen und in Längsrichtung in einem vorzugsweise konstanten Abstand angeordnet sind. Es ist auch möglich die Borstenebenen nicht regelmässig anzuordnen d.h. ihre Abstände zu variieren.

Zwischen den Längsmittelebenen, die durch die Borsten definiert werden, ist ein Winkel von vorzugsweise 45°, 60° oder 90° ausgebildet, der aufgrund der vorzugsweisen regelmässigen Anordnung der Borstenreihen über den ganzen Querschnitt des Borstenfeldes regelmässig ist. Eine unregelmässige Anordnung d.h. unterschiedliche Winkel zwischen den Borstenreihen ist möglich.

Der Abstand zwischen benachbarten Borsten, in Längsrichtung und auf der Verbindungslinie von Mitte Borste zu Mitte Borste zwischen den Borsten gemessen, beträgt vorzugsweise zwischen 0,2 mm und 0,8 mm, insbesondere zwischen 0,4 mm und 0,6 mm.

Bevorzugt sind in einer Borstenreihe 10 bis 40, insbesondere 18 bis 30 Borsten vorgesehen. Im ganzen Borstenfeld sind auf diese Weise zwischen 22 und 400 vorzugsweise zwischen 100 und 150 Borsten angeordnet.

Der Aussendurchmesser des Borstenfeldes beträgt vorzugsweise 1 mm bis 6 mm, besonders bevorzugt 1,5 mm bis 4 mm.

Aus den angegebenen Abmessungen für die Ummantelung und die Borsten ergeben sich selbstverständlich auch die Abmessungen für die durch die Borstenfeld-Werkzeugteile gebildete Borstenfeldkavität.

Die Trennebene der Borstenfeld-Werkzeugteile verläuft bevorzugt durch die Borsten wenigstens einer Borstenreihe. Sind vier Borstenreihen vorgesehen, verläuft die Trennebene bevorzugt durch die Borsten von zwei einander diametral gegenüber liegenden Borstenreihen. Besonders bevorzugt ist jeder Borstenreihe eine Trennebene zugeordnet, dies insbesondere im Falle, dass mehr als zwei Borstenfeld-Werkzeugteile vorgesehen sind. Dies bringt eine einfachere Herstellung mit sich, bietet für das Spritzgusswerkzeug genügend Entlüftungsmöglichkeiten für die Borsten und schlussendlich sind die Borstenlängen und Durchmesser durch das Herstellungsverfahren des Spritzgusswerkzeugs nicht beschränkt.

Die Klemmstempel sind bevorzugt kreiszylinderförmig ausgebildet und weisen einen Durchmesser von 0,75 mm bis 3 mm, besonders bevorzugt von 1,2 mm bis 1,8 mm auf. Dieser Durchmesser entspricht auch dem Durchmesser der durch die Klemmstempel gebildeten Ausnehmung beziehungsweise des Durchlasses im Halsbereich.

Weitere alternative Querschnitte sind beispielsweise ovale oder n-eckige Formen. Die runden Formen haben aus kunststofffliesstechnischen Gründen den Vorzug.

Die Klemmstempel weisen an ihren einander zugewandten Endbereichen bevorzugt Zähne beziehungsweise Klemmzacken mit einer Höhe von 0,4 mm bis 2 mm, bevorzugt 0,6 mm bis 0.9 mm auf (diese Höhe ist ab der Längsachse 22 gemessen). Bezüglich der Längsrichtung sind bevorzugt auf der einen Seite ein Zahn und auf der anderen Seite zwei Zähne vorgesehen. Der andere Klemmstempel ist gegengleich ausgebildet, so dass die Zähne in Klemmstellung ineinander kämmend eingreifen. Es können auch mehr als drei Zähne pro Klemmstempel vorhanden sein.

Es ist auch denkbar, dass der eine Klemmstempel zwei einander gegenüberliegende Zähne aufweist, welche in entsprechende Zahnlücken zwischen jeweils zwei Zähnen des anderen Klemmstempels eingreifen.

Die Länge der Fixierung des Tragkerns durch den Klemmstempel oder ein anderes Fixierelement beträgt zwischen 0,7 mm und 2,5 mm vorzugsweise zwischen 1 mm und 2 mm.

Dabei ist diese Länge unter den verschiedenen Elementen z.B. Zähnen vorzugsweise regelmässig verteilt d.h. sie haben dieselben Breiten. Alternativ ist es auch möglich, die Breiten zu variieren.

Die Position der Fixierelemente ist bevorzugt so gewählt, dass der Abstand vom Fixierelement bis zum Beginn des Borstentragstamms zwischen 1 mm und 6 mm vorzugsweise zwischen 3 mm und 5 mm beträgt.

Es ist auch denkbar, ein Zwei- oder Mehrkomponentenspritzgussverfahren anzuwenden. Dabei ist es beispielsweise möglich, die Schicht beziehungsweise die Ummantelung und die Borsten aus einem Kunststoff und der Griffteil aus einem anderen Kunststoff herzustellen. Weiter ist es auch möglich, die Ummantelung und die Borsten sowie einen Teil des Griffs aus einem Kunststoff herzustellen und den restlichen Teil des Griffteils durch Anspritzen eines zweiten Kunststoffs zu fertigen. Der zweite Kunststoff kann auch freiliegende Teile des Tragkerns abdecken.

Für die Realisierung der Bürste, insbesondere der Interdentalbürste können verschiedene Kunststoffe eingesetzt werden. Die unten angegebenen Materialien können für einen möglichen Tragkern aus Kunststoff, das Borstenfeld und die Ummantelung oder den Griffteil eingesetzt werden. Bevorzugt werden Kunststoffe eingesetzt, die mittels Mehrkomponentenspritzguss einen Materialschluss miteinander eingehen.

Ein Tragkern aus Kunststoff ist aus einem härteren Kunststoff gefertigt als der Kunststoff für das Borstenfeld und die Schicht beziehungsweise Ummantelung oder das Griffteil.

Beispielhafte Möglichkeiten aus dem Bereich der Thermoplaste sind folgende Hartkomponenten:
- Styrolpolymersiate wie Styrolacrylnitril (SAN), Polystyrol (PS), Acrylnitrylbutadienstyrol (ABS), Styrolmethylmethacrylate (SMMA) oder Styrolbutadien (SB);
- Polyolefine wie Polypropylen (PP) oder Polyethylen (PE) beispielsweise auch in den Formen high density Polyethlen (HDPE) oder low density Polyethylen (LDPE);
- Polyester wie Polyehtylenterephtalat (PET) in Form von säuremodifiziertem Polyethylenterphtalat (PETA) oder glykolmodifiziertem Polyethylenterephtalat (PETG), Polybutylenerephtalat (PBT), säuremodifiziertes Polycyclohexylenedimethyleneterephtalate (PCT-A) oder glykolmodifiziertes Polyclyclohexylenedimethyleneterephtalate (PCT-G);
- Cellulosederivate wie Celluloseacetat (CA), Celluloseacetobutyrat (CAB), Cellulosepropionat (CP), Celluloseacetatphtalat (CAP) oder Cellulosebutyrat (CB);
- Polyamide (PA) wie PA 6.6, PA 6.10 oder PA 6.12;
- Polymethylmethacrylat (PMMA);
- Polycarbonat (PC);
- Polyoxymethylen (POM);
- Polyvinylchlorid (PVC);
- Polyurethan (PUR)

Beispiele aus dem Bereich der thermoplastischen Elastomeren (TPE's) sind folgende Weichkomponenten:
- Thermoplastische Polyurethan-Elastomere (TPE-U)
- Thermoplastische Styrol-Elastomere (TPE-S) wie beispielsweise ein Styrol-Ethylen-Butylen-Styrol-Copolymer (SEBS) oder Styrol-Butadien-Styrol-Copolymer (SBS)
- Thermoplastische Polyamid-Elastomere (TPE-A)
- Thermoplastische Polyolefin-Elastomere (TPE-O)
- Thermoplastische Polyester-Elastomere (TPE-E)

Weiter können die Thermoplaste Polyethylen (PE) und Polyurethan (PU) wie genannt als Hartkomponente als auch als Weichkomponente eingesetzt werden.

Als Polyolefin kann insbesondere ein Ethylenvinylacetat (EVA) eingesetzt werden.

Besonders geeignet als Hartkomponente ist PP, am meisten bevorzugt wird PP mit einem E-Modul von 1000 - 2400 N/mm2, vorzugsweise 1300 bis 1800 N/mm2. Als Weichkomponente wird bevorzugt ein TPE-S eingesetzt. Die Shore A Härten der Weichkomponente liegen vorzugsweise unter 90 Shore A. Die Weichkomponenten bilden mit der Hartkomponente mittels Überspritzen im Zwei- oder Mehrkomponentenspritzgussverfahren einen Materialschluss.

Beispielmaterialien für die Herstellung von gespritzten Borsten:
- Polyamid Elastomer (z.B. Grilflex ELG 5930 von Ems-Chemie AG)
- Polyester Elastomer (z.B. Riteflex 672 RF Nat oder Riteflex RKX 193 RF Nat von Ticona Polymers oder Hytrel 7248 von DuPont)
- Thermoplastische Polyurethan-Elastomere (z.B. Desmopan DP 1092A, DP 3065D, DP 1092A von Bayer Material Science oder Elastolan 1154 D, 1195 A von BASF)

Die Borstenmaterialien haben eine Shore D Härte von 0 bis 100 vorzugsweise 30 bis 80 besonders bevorzugt von 50 bis 70.

Ebenfalls einsetzbar sind sogenannte Biokunststoffe, Kunststoffe, die aus nachwachsenden Rohstoffen hergestellt sind.

Mit dem Verfahren und einem derartigen Spritzgusswerkzeug lassen sich insbesondere auch Mascarabürsten herstellen. Bei diesen beträgt die Länge des Borstenfeldes 8 mm bis 30 mm, vorzugsweise 8 mm bis 15 mm oder 22 mm bis 28 mm. Die Borsten weisen eine Länge von 1.5 mm bis 3 mm auf. Alle übrigen Abmessungen können jenen der Interdentalbürste entsprechen.

Ebenso ist es denkbar, auf dieselbe Art und Weise Behandlungsköpfe von elektrisch betriebenen Interdentalreinigern (Zahnbürsten) oder von Ohrenreinigern, Pfeifenputzern, Flaschenbürsten und Applikatorbürsten (Medizinalbereich) herzustellen.

Die Tragkerne werden vorzugsweise mittels eines Vorschub- und Zuführgerätes in die Borstenfeldkavität eingeführt. Dieses Gerät kann beispielsweise ein Magazin mit Tragkernen, welche vereinzelt und dann in die Borstenfeldkavität vorgeschoben werden, oder eine Schneideeinrichtung aufweisen, welche von einem langen Vorrat Tragkerne bildende Abschnitte abtrennt, welche der Borstenfeldkavität zugeführt werden.

Alternativ werden die Tragkerne in einem vorgeschalteten oder integrierten Spritzgusswerkzeug gefertigt. Es kann ein Mehrkomponentenspritzgusswerkzeug eingesetzt werden.

Die Zeichnungen stellen verschiedene Ausführungsbeispiele dar. Es zeigen rein schematisch:
- Fig. 1: in perspektivischer Darstellung eine Interdentalbürste, welche keine Ausführungsform der Erfindung ist;
- Fig. 2: in Ansicht von vorne die Interdentalbürste von Fig. 1;
- Fig. 3: in Draufsicht die Interdentalbürste von Fig. 1;
- Fig. 4: in Ansicht von hinten die Interdentalbürste von Fig. 1;
- Fig. 5: in Untersicht die Interdentalbürste von Fig. 1;
- Fig. 6: in Seitenansicht in Richtung des Pfeiles VI der Fig. 2 der Borstenbesatz der in den Fig. 1 bis 5 gezeigten Interdentalbürste;
- Fig. 7: in gleicher Darstellung wie Fig. 2, jedoch vergrössert einen Teil der Interdentalbürste mit dem Borstenbesatz;
- Fig. 8: in Draufsicht und gegenüber Fig. 3 vergrössert denselben Teil der Interdentalbürste wie Fig. 7;
- Fig. 9: in einem Querschnitt zwischen zwei Borstenebenen entlang der Linie IX - IX der Fig. 8 die Interdentalbürste;
- Fig. 10: in einem Querschnitt in einer Borstenebene entlang der Linie X - X der Fig. 8 die Interdentalbürste;
- Fig. 11: in einem Längsschnitt entlang der Linie XI - XI der Fig. 7 die Interdentalbürste;
- Fig. 12: in Ansicht und stark vereinfacht einen ersten Teil des Spritzgusswerkzeugs im geschlossenen Zustand und einen zweiten Teil des Spritzgusswerkzeugs mit einer geöffneten Griffkavität und einem sich darin befindenden gespritzten Griff einer Interdentalbürste;
- Fig. 13: einen Längsschnitt durch das Spritzgusswerkzeug entlang der Linie XIII - XIII der Fig. 12 mit einer darin hergestellten Interdentalbürste, wobei der zweite Werkzeugteil in einer teilweisen Offenstellung und der erste Werkzeugteil in seiner geschlossenen Stellung gezeigt ist;
- Fig. 14: einen Querschnitt durch den ersten Teil des sich im geschlossenen Zustand befindlichen Spritzgusswerkzeugs mit einer Interdentalbürste in einer Borstenebene entlang der Linie XIV - XIV der Fig. 13;
- Fig. 15: in perspektivischer Darstellung ein Teil des ersten Werkzeugteils mit einer Borstenfeldkavität und einem in diese eingebrachten Tragkern;
- Fig. 16: in gleicher Darstellung wie Fig. 15 den Teil des ersten Werkzeugteils mit einer darin gespritzten Interdentalbürste;
- Fig. 17: in perspektivischer Darstellung einen Teil des ersten Werkzeugteils im geöffneten Zustand in einer weiteren Ausführungsform;
- Fig. 18: in gleicher Darstellung wie Fig. 17 den Teil des ersten Werkzeugteils ebenfalls in geöffnetem Zustand, jedoch mit einer darin hergestellten Interdentalbürste;
- Fig. 19a: in perspektivischer Darstellung einen ersten Klemmstempel zum Festhalten des Tragkerns im Spritzgusswerkzeug;
- Fig. 19b: einen zweiten Klemmstempel, dessen freier Endbereich gegengleich dem in Fig. 19a gezeigten ersten Klemmstempel geformt ist;
- Fig. 20: in Ansicht und schematisch das Spritzgusswerkzeug;
- Fig. 21: ein Ablaufdiagramm für die Herstellung einer Interdentalbürste;
- Fig. 22: vereinfacht ein Ablaufschema zu möglichen weiteren Verarbeitung der im Spritzguss hergestellten Interdentalbürste;
- Fig. 23: in perspektivischer Darstellung eine Ausführungsform einer erfindungsgemässen Interdentalbürste;
- Fig. 24: in Ansicht von vorne die Interdentalbürste von Fig. 23;
- Fig. 25: in Ansicht von hinten die Interdentalbürste von Fig. 23;
- Fig. 26: in Seitenansicht die Interdentalbürste von Fig. 23;
- Fig. 27: in Frontalansicht die Interdentalbürste von Fig. 23;
- Fig. 28: in einem Querschnitt zwischen Borstenebenen die Interdentalbürste aus Fig. 23;
- Fig. 29: in einem Querschnitt zwischen Borstenebenen die Interdentalbürste aus Fig. 23 in einer weiteren Ausgestaltungsvariante der Kombination Tragkern / Ummantelung beziehungsweise Schicht;
- Fig. 30: in Ansicht von vorne eine Produktgruppe von Interdentalbürsten gemäss Fig. 23-29;
- Fig. 31: in Ansicht von hinten die Produktgruppe von Interdentalbürsten gemäss Fig. 23-29;
- Fig. 32: in Ansicht von vorne eine weitere Ausführungsform einer Interdentalbürste;
- Fig. 33: in Ansicht von hinten die Interdentalbürste gemäss Fig. 32;
- Fig. 34: in Seitenansicht die Interdentalbürste gemäss Fig. 32;
- Fig. 35: in Ansicht von hinten eine Produktgruppe von Interdentalbürsten gemäss Fig. 32;
- Fig. 36: in Ansicht von vorne eine Produktgruppe von Interdentalbürsten gemäss Fig. 32;
- Fig. 37: in Frontalansicht die Verbundgruppe von Interdentalbürsten gemäss Fig. 32;
- Fig. 38: in Ansicht von vorne eine weitere Ausführungsform einer Interdentalbürste;
- Fig. 39: in Ansicht von hinten die Interdentalbürste gemäss Fig. 38;
- Fig. 40: in Seitenansicht die Interdentalbürste gemäss Fig. 38;
- Fig. 41: in Frontalansicht die Interdentalbürste gemäss Fig. 38;
- Fig. 42: in Ansicht von hinten eine Produktgruppe von Interdentalbürsten ähnlich zu Fig. 38-40;
- Fig. 43: in Ansicht von vorne die Produktgruppe von Interdentalbürsten ähnlich zu Fig. 38-40;
- Fig. 44: in Ansicht von vorne eine weitere Ausführungsform einer Interdentalbürste mit umspritztem Draht;
- Fig. 45: in Seitenansicht die Interdentalbürste gemäss Fig. 44;
- Fig. 46: in Ansicht von vorne eine bevorzugte Ausführungsform einer Interdentalbürste mit umspritztem Draht.

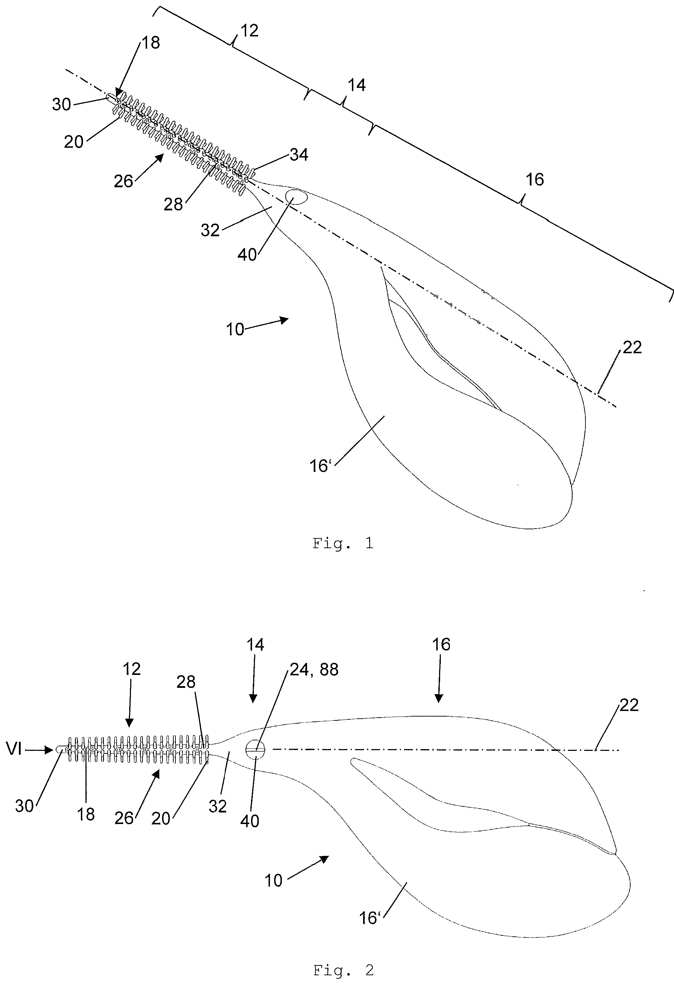

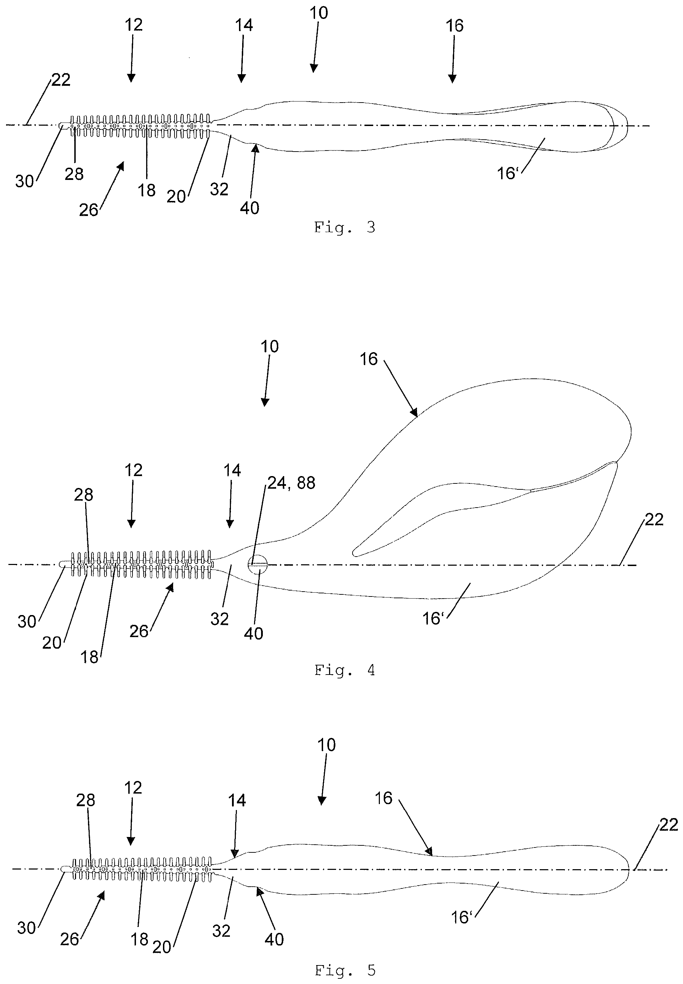

Die in den Figuren 1 bis 11 dargestellte Interdentalbürste 10 weist einen Borstenfeldabschnitt 12, einen Halsabschnitt 14 und einen Griffabschnitt 16 mit einem Griff 16' auf. Ein Borstentragstamm 18, von welchem Borsten 20 abstehen, erstreckt sich, im vorliegenden Fall geradlinig, über die gesamte Länge des Borstenfeldabschnitts 12 und legt eine Längsrichtung 22 fest; die die Längsrichtung 22 angebende strichpunktierte Linie definiert auch die Längsachse.

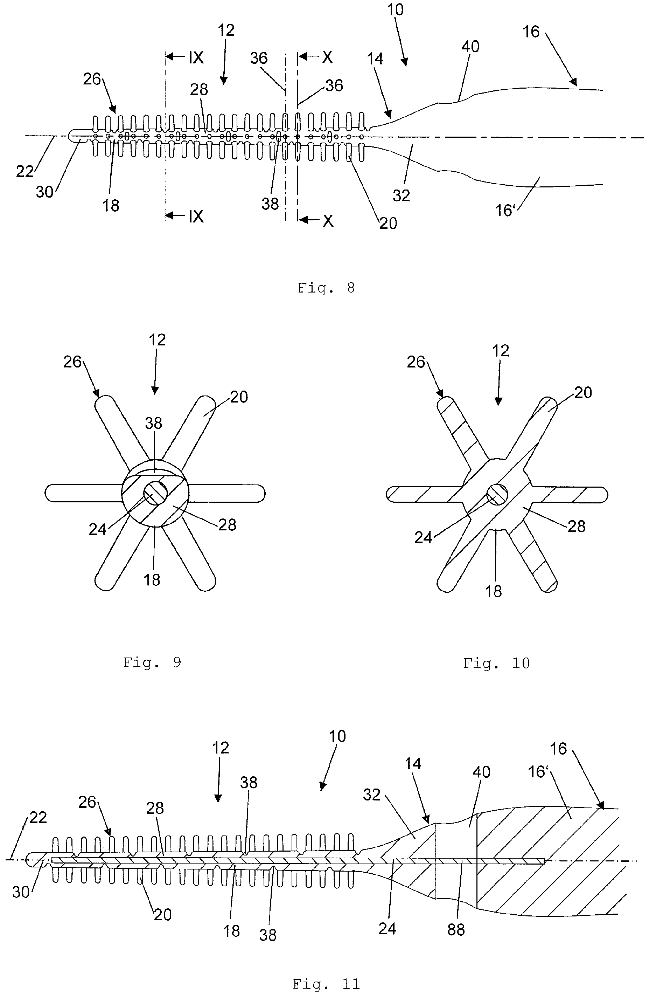

Wie dies insbesondere den Figuren 9 bis 11 entnehmbar ist, verläuft im Inneren des Borstentragstamms 18 und koaxial zur Längsachse 22 ein länglicher Tragkern 24, welcher im gezeigten Ausführungsbeispiel durch einen Federstahldraht gebildet ist. Er erstreckt sich über die Länge des von den Borsten 20 gebildeten Borstenfeldes 26 und über den Halsabschnitt 14. Der Tragkern 24 trägt im Bereich des Borstenfeldes 26 eine Schicht 28, welche hier eine Ummantelung 28 bildet, welche mit einer kappenartigen Verlängerung 30 das dem Halsabschnitt 14 abgewandte freie Ende des Borstentragkerns 24 umschliesst. Die Ummantelung 28 ist derart ausgebildet, dass beim Einsatz der Interdentalbürste der Tragkern 24 nicht mit den Zähnen beziehungsweise dem Zahnfleisch in Berührung gelangen kann. Dabei ist die kappenartige Verlängerung 30 vorzugsweise kontinuierlich an die Ummantelung 28 anschliessend ausgebildet.

Die Ummantelung 28 und die Borsten 20 sind im Spritzgussverfahren aus demselben Kunststoffmaterial hergestellt, aus welchem - im vorliegenden Fall - auch der Griffabschnitt 16 und, im den Borstenfeldabschnitt 12 mit dem Griffabschnitt 16 verbindenden Halsabschnitt 14, der den Tragkern 24 umgebenden Halsmantel 32 gespritzt sind. Die Ummantelung 28 mit der Verlängerung 30, die Borsten 20, der Halsmantel 32 und der den Griff 16' bildenden Griffabschnitt 16 sind integral miteinander ausgebildet und in einem einzigen Spritzgussschritt geformt.

Selbstverständlich ist es möglich, in einem Zwei- oder Mehrkomponenten-Spritzgussverfahren, beispielsweise mit einer ersten Kunststoffkomponente den Borstenfeldabschnitt 12 und den Halsabschnitt 14 auszubilden, um mit einer zweiten Kunststoffkomponente den Griffabschnitt 16 zu formen oder beispielsweise im Griffabschnitt an den aus der ersten Komponente geformten Teil des Griffs 16' eine zweite Komponente anzuspritzen, beispielsweise eine Weichkomponente, um die Griffigkeit zu verbessern.

Der Borstentragstamm 18 ist von der Verlängerung 30 her bis zum Beginn des Halsabschnitts 14 sich (leicht) konisch erweiternd ausgebildet.

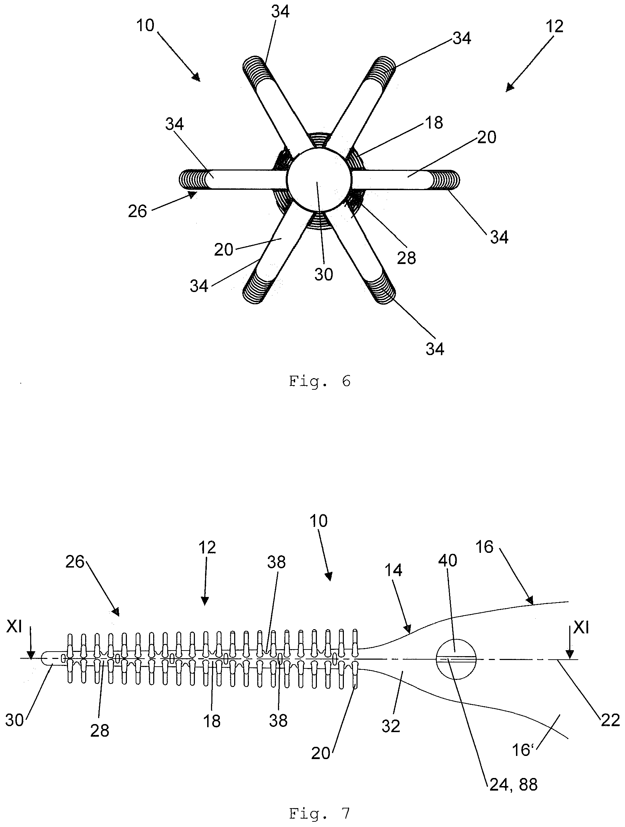

Die Borsten 20 sind in Borstenreihen 34 angeordnet - im gezeigten Ausführungsbeispiel sind sechs Borstenreihen 34 vorhanden -, welche in Längsrichtung 22 sowie radial verlaufen und in Umfangsrichtung gleichmässig verteilt sind. Weiter befinden sich die Borsten in Borstenebenen 36, welche rechtwinklig zur Längsrichtung 22 verlaufen und in Längsrichtung 22 im Abstand zueinander angeordnet sind. In jeder der Borstenebenen 36 befindet sich jeweils eine Borste 20 jeder Borstenreihe 34. Der besseren Übersichtlichkeit halber sind die Borstenreihen nur in Figur 6 mit dem Bezugszeichen 34 gekennzeichnet und sind nur in Figur 8 zwei Borstenebenen 36 eingezeichnet; im gezeigten Ausführungsbeispiel sind zweiundzwanzig Borstenebenen 36 vorhanden.

Die Ummantelung 28 weist - im gezeigten Ausführungsbeispiel - immer mittig zwischen jeweils zwei benachbarten Borstenebenen 36 geradlinige und rechtwinklig zur Längsrichtung verlaufende, Stützstellen 38 definierende, im Querschnitt wenigstens annähernd nahezu halbkreisförmige Nuten auf, wobei diese Stützstellen 38 von Zwischenraum zu Zwischenraum zwischen jeweils zwei Borstenebenen 36 in einer Drehrichtung um 90° versetzt angeordnet sind.

Zwischen dem Boden dieser Nuten und dem Tragkern 24 befindet sich allenfalls eine dünne Schicht, ein Film des Kunststoffs. Es ist jedoch auch denkbar, dass beim Boden der Stützstellen 38 der Tragkern 24 frei liegt. Er kann jedoch auf Grund der Ummantelung 28 nicht mit den Zähnen und dem Zahnfleisch in Berührung gelangen.

Wie weiter aus den Figuren hervorgeht, liegen die freien Enden der Borsten 20 auf der Mantelfläche eines gedachten Konus, welcher sich vom freien Ende des Borstenfeldes 26 her in Richtung zum Halsabschnitt 14 (leicht) erweitert und dessen Achse mit der Längsachse 22 zusammenfällt.

Im gezeigten Ausführungsbeispiel sind die Borsten 22 im Querschnitt kreisrund und in radialer Richtung gegen aussen konisch verjüngend ausgebildet, wobei die Enden der Borsten 20 abgerundet, hier halbkugelförmig ausgebildet sind.

Der Konuswinkel beträgt hierbei zwischen 1° und 2°. Andere Querschnitte für Borsten 20 sind selbstverständlich möglich, die Grenzen setzt hierbei die Entformbarkeit der Borsten 20 im Spritzgiessprozess.

Bevorzugte Abmessungen für den Borstentragstamm 18, die Borsten 20, der Tragkern 24, die Ummantelung 28 und die Ausbildung des Borstenfeldes 26 sind in der Einleitung angegeben.

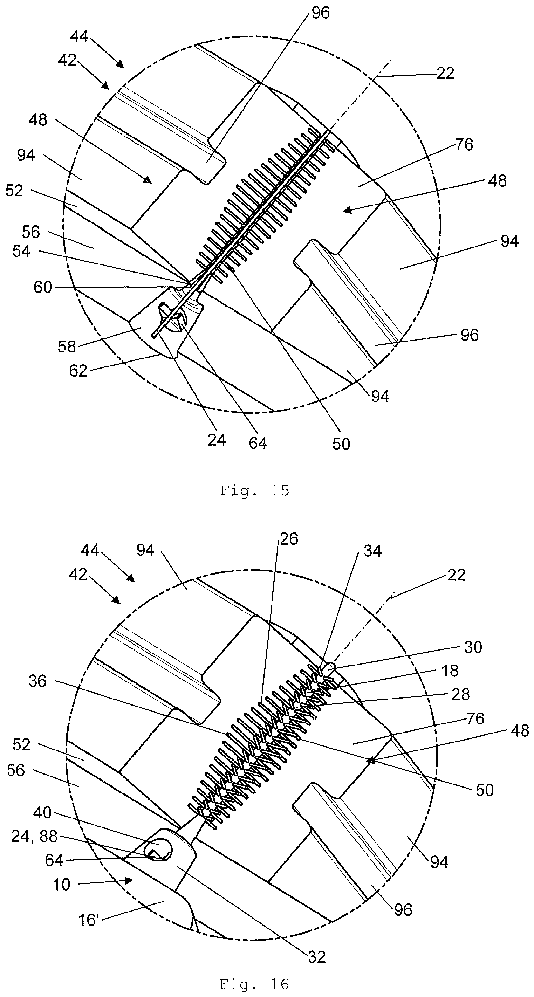

Es ist auch denkbar, den Borstentragstamm 18 zylindrisch, insbesondere kreiszylindrisch auszubilden und/oder die freien Enden der Borsten 20 im Mantel eines gedachten, zur Längsachse 22 konzentrischen Kreiszylinders anzuordnen, oder, wie dies in Zusammenhang mit den Figuren 15 bis 18 gezeigt ist, in den Mantelflächen von zwei entgegen gerichteten Konussen vorzusehen. Auch andere Formen sind möglich.

Die Ummantelung 28 geht kontinuierlich in den Halsmantel 32 im Halsabschnitt 14 über, wo sich der Aussenquerschnitt vom Halsabschnitt 14 in Richtung zum Griffabschnitt 16 kontinuierlich vergrössert. Weiter geht die Ummantelung 28 im freien Endbereich der Interdentalbürste 10 kontinuierlich in die kappenartige Verlängerung 30 über.

Der Halsmantel 32 weist einen rechtwinklig zur Längsrichtung 22 verlaufenden Durchlass 40 auf, welcher im vorliegenden Fall kreiszylinderförmig ist und durch welchen mittig hindurch der Tragkern 24 verläuft. Dieser ist von aussen einsehbar. In bevorzugter Weise liegt das griffseitige Ende des Tragkerns 24 nicht im Durchlass 40 sondern es erstreckt sich ein Endabschnitt des Tragkerns 24 vom Durchlass 40 in Richtung gegen den Griffabschnitt 16 in den Kunststoff hinein, aus welchem der Griff 16', der Halsmantel 32, die Ummantelung 28 mit der Verlängerung 30 und die Borsten 20 gefertigt sind; dies zeigt insbesondere Figur 11 .

Im gezeigten Ausführungsbeispiel hat der Griffabschnitt 16 beziehungsweise der Griff 16' etwa die Grösse einer Fingerkuppe, so dass er von Daumen und Zeigfinger problemlos gehalten werden kann. Selbstverständlich kann dem Griffabschnitt 16 beziehungsweise Griff 16' eine beliebige andere Form gegeben werden, insbesondere kann er länger ausgebildet werden.

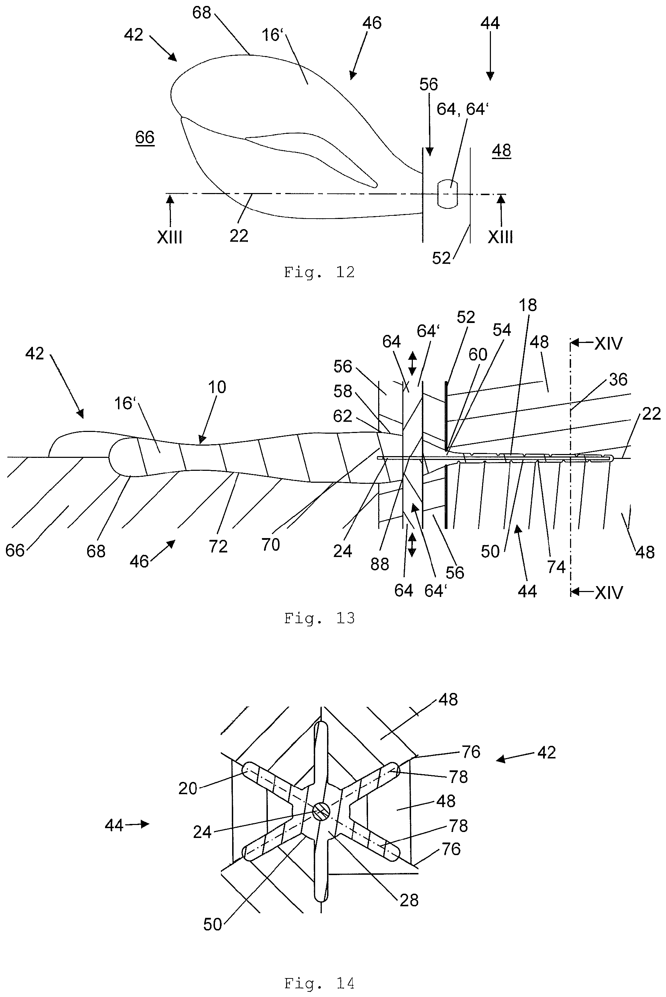

Die Figuren 12 bis 14 zeigen stark vereinfacht eine Ausführungsform eines Spritzgusswerkzeugs 42 zur Herstellung der in den Figuren 1 bis 11 gezeigten Interdentalbürste 10.

Das Spritzgusswerkzeug 42 weist einen ersten Werkzeugteil 44 für die Herstellung des Borstenfeldabschnitts 12 und des Halsabschnitts 14 sowie einen zweiten Werkzeugteil 46 zur Herstellung des Griffabschnitts 16 auf.

Der erste Werkzeugteil 44 ist im gezeigten Ausführungsbeispiel mit sechs Borstenfeld-Werkzeugteilen 48 versehen, welche im geschlossenen Zustand eine Borstenfeldkavität 50 zur Herstellung der Ummantelung 28, der Borsten 20 und der kappenartigen Verlängerung 30 begrenzen. An einer Stirnseite 52 - diese ist einem Halswerkzeugteil 56 und somit dem zweiten Werkzeugteil 46 zugewandt - weist die Borstenfeldkavität 50 eine Borstenfeldkavitätsöffnung 54 auf.

Weiter sind dem ersten Werkzeugteil 44 die zwei balkenartig ausgebildete Halswerkzeugteile 56 zugeordnet, welche - in geschlossenem Zustand - eine Halskavität 58 begrenzen. Die Halskavität 58 weist auf der der Borstenfeldkavität 50 zugewandten Seite eine erste Halskavitätsöffnung 60 auf, welche - in geschlossenem Zustand des Spritzgusswerkzeugs 42 - bei der Borstenfeldkavitätsöffnung 54 angeordnet ist und mit dieser fluchtet; die Halswerkzeugteile 56 liegen an der Stirnseite 52 an. Weiter weist die Halskavität 58 auf der der Borstenfeldkavität 50 abgewandten und dem zweiten Werkzeugteil 46 zugewandten Seite eine zweite Halskavitätsöffnung 62 auf.

Weiter ist jedem der Halswerkzeugteile 56 ein Klemmstempel 64 zugeordnet. Die Klemmstempel 64 liegen bezüglich der Längsrichtung 22, welche durch die Borstenfeldkavität 50 definiert ist, einander radial gegenüber und sind entlang einer Geraden, die rechtwinklig zur Längsachse 22 verläuft und diese schneidet, von einer Ruhestellung, in welcher sie voneinander beanstandet sind, aufeinander zu in eine in der Figur 13 gezeigte Klemmstellung bewegbar; diese Bewegbarkeit ist durch Doppelpfeile angegeben.

Die Klemmstempel 64 bilden zusammen ein Fixierelement 64' zum Fixieren des Tragkerns 24.

Der zweite Werkzeugteil 46 weist zwei Griffwerkzeugteile 66 auf, welche im geschlossenen Zustand eine Griffkavität 68 ausbilden. Der besseren Übersichtlichkeit halber ist in den Figuren 12 und 13 nur eines der Griffwerkzeugteile 66 gezeigt.

Die Griffkavität 68 weist an einer der Halskavität 58 zugewandten Seite eine Griffkavitätsöffnung 70 auf, welche - in geschlossenem Zustand des Spritzwerkzeugs - bei der zweiten Halskavitätsöffnung 62 anliegend angeordnet ist und mit dieser fluchtet.

Im geschlossenen Zustand des Spritzgusswerkzeugs 42 bilden die Borstenfeldkavität 50, die Halskavität 58 und die Griffkavität 68 gemeinsam eine Spritzkavität 72.

Wie dies allgemein bekannt und auch aus der in den Figuren 13 und 14 gezeigten Interdentalbürste 10 hervorgeht, sind die Borstenfeldkavität 50 entsprechend dem Borstenfeldabschnitt 12 der Interdentalbürste 10, die Halskavität 58 entsprechend dem Halsabschnitt 14 der Interdentalbürste 10 und die Griffkavität 68 entsprechend dem Griffabschnitt 16 der Interdentalbürste 10 ausgebildet. Die Abmessungen dieser Kavitäten 50, 58, 68 gehen somit auch aus den in der Einleitung angegebenen Abmessungen der Interdentalbürste 10 hervor. Die Formen der Kavitäten 50, 58 und 68 ergeben sich aus der in den Figuren gezeigten Interdentalbürste 10.

Wie dies insbesondere der Figur 13 entnehmbar ist, welche bei einseitig geöffnetem zweiten Werkzeugteil 46 auch eine im Spritzgusswerkzeug 42 hergestellte Interdentalbürste 10 zeigt, wird der Tragkern 24 während des Spritzgiessens des Kunststoffs mittels den das Fixierelement 64' bildenden Klemmstempeln 64 festgeklemmt gehalten.

Wird der Kunststoff in die Griffkavität 68 eingespritzt, fliesst dieser durch die Halskavität 58 in die Borstenfeldkavität 50 ohne dass der Tragkern 24 in Längsrichtung 22 verschoben werden kann.

Überdies sind in der Figur 13 Stützelemente 74 gezeigt, welche an Borstenfeldwerkzeugteilen 48 ausgebildet sind und gegengleich den im Zusammenhang mit der Beschreibung der Interdentalbürste 10 beschriebenen Stützstellen 38 entsprechen. Die Stützelemente 74 stehen in Richtung gegen das Innere der Borstenfeldkavität 50 vor und bilden so die Stützstellen 38.

Wie dies weiter der Figur 13 entnehmbar ist, geht die Borstenfeldkavität 50 im geschlossenen Zustand des Spritzgusswerkzeugs 42 kontinuierlich in die Halskavität 58 und diese kontinuierlich in die Griffkavität 68 über und bilden so die Spritzkavität 72. Selbstverständlich ist es denkbar, bei diesen Übergangsstellen Stufen, Nuten oder Rillen auszubilden.

Wie dies aus der Figur 14 hervorgeht, fallen die Trennebenen 76 der Borstenfeld-Werkzeugteile 48 mit den Längsmittelebenen 78 der Borstenreihen 34 zusammen.

Überdies zeigt Figur 14 die in einer der Borstenebenen 36 angeordneten Borsten 20, welche integral mit der Ummantelung 28 des Tragkerns 24 im Spritzgussverfahren hergestellt werden.

Im Zusammenhang mit den Figuren 12 bis 14 können bereits die Grundzüge des Verfahrens erörtert werden.

Die Borstenfeld-Werkzeugteile 48 werden, im gezeigten Ausführungsbeispiel, in radialer Richtung betreffend der Längsrichtung 22 in den geschlossenen Zustand des ersten Werkzeugteils 44 überführt, wonach sie die Borstenfeldkavität 54 bilden, welche an der Stirnseite 52 die Borstenfeldkavitätsöffnung 54 aufweist. Dann wird der (in Längsrichtung angeordnete) Tragkern 24 in Längsrichtung 22 durch die Borstenfeldkavitätsöffnung 54 in die Borstenfeldkavität 50 eingeführt und anschliessend mittels der Klemmstempel 64 an Ort und Stelle gehalten.

Dabei wird entweder der Tragkern 24 zuerst in das Halswerkzeugteil 56 eingeführt sowie geklemmt und dann durch das Zufahren des Halswerkzeugteils 56 an die Stirnseite 52 der Borstenfeld-Werkzeugteile 48, in die Borstenfeldkavität 50 eingeführt oder das Halswerkzeugteil 56 wird an die Borstenfeldkavität 50 angefahren, der Tragkern 24 durch das Halswerkzeugteil 56 hindurch in die Borstenfeldkavität 50 gefahren und anschliessend geklemmt.

Durch Einspritzen von Kunststoff in die Borstenfeldkavität 50 werden die Ummantelung 28 und damit integral die Borsten 20 ausgebildet.

Der Kunststoff wird durch die Borstenfeldkavitätsöffnung 54 in die Borstenfeldkavität 50 eingebracht.

Im gezeigten Ausführungsbeispiel wird der Tragkern 24 mittels der Stützelemente 74, welche in Umfangsrichtung und in Längsrichtung 22 verteilt sind, zentrisch in der Borstenfeldkavität 50 gehalten.

Im gezeigten Ausführungsbeispiel sind die Klemmstempel 64 den Halswerkzeugteilen 56 zugeordnet, welche - im geschlossenen Zustand - die mit der Borstenfeldkavität 50 verbundene Halskavität 58 begrenzen. Es wird somit gleichzeitig und integral mit der Ummantelung 28 und den Borsten 20 auch der Halsmantel 32 gespritzt.

Dabei werden die Klemmstempel 64 vom Kunststoff umflossen und der Durchlass 40 im Halsmantel 32 ausgebildet.

Weiter wird im gezeigten Ausführungsbeispiel auch ein Griff 16' der Interdentalbürste 10 geformt. Dazu wird der erste Werkzeugteil 44 mit dem in die Borstenfeldkavität 50 eingeführten Tragkern 24, welcher mittels der Klemmstempel 64 festgehalten wird, zum zweiten Werkzeugteil 46 verbracht, so dass die zweite Halskavitätsöffnung 62 bei der Griffkavitätsöffnung 70 zu liegen kommt. Bei in Schliessstellung befindlichen Griffwerkzeugteilen 66 und somit geschlossener Griffkavität 68 wird in diese der Kunststoff eingespritzt, welcher durch die Halskavität 58 auch in die Borstenfeldkavität 50 gelangt.

Zum Entformen wird zuerst die Griffkavität 68 durch voneinander Abheben der Griffwerkzeugteile 66 geöffnet. Dann wird der Griff 16' aus dem Bereich der Griffkavität 68 entfernt, indem der erste Werkzeugteil 44 und der zweite Werkzeugteil 46 voneinander weg bewegt werden. Nach dem Verbringen der Klemmstempel 64 von der Klemmstellung in radialer Richtung ausserhalb der Halskavität 58 und das Öffnen der Halskavität 58 durch voneinander Wegbewegen der Halswerkzeugteile 56 sowie Öffnen der Borstenfeldkavität 50 durch in radialer Richtung voneinander Wegbewegen der Borstenfeld-Werkzeugteile 48, wird die Interdentalbürste 10 vollständig entformt.

Die Figuren 15 bis 18 zeigen in perspektivischer Darstellung den ersten Werkzeugteil 44 zur Herstellung von Interdentalbürsten, wie sie in den übrigen Figuren gezeigt und weiter oben beschrieben sind. Vom Werkzeugaufbau her liegt der Unterschied zu den bereits gezeigten und beschriebenen Figuren darin, dass die kappenartige Verlängerung 30 in einem separaten Teil des ersten Werkzeugteils 44 - einem Kappenwerkzeugteil 80 - geformt wird. Dieses Werkzeugteil wäre in Fig. 15 und 16 sichtbar, ist aber aus Klarheitsgründen nicht gezeigt.

Die Unterschiede auf der Produktseite bestehen in der Ausbildung des Borstenfeldes 26 und in der Form des Griffs 16'. Alle Borsten 20 sind wiederum in sechs in Umfangsrichtung gleichmässig verteilten Borstenreihen 34 angeordnet und alle Borsten 20 befinden sich in Borstenebenen 36, die in Längsrichtung 22 in gleich bleibendem Abstand voneinander angeordnet sind. In jeder Borstenebene 36 befindet sich eine Borste 20 jeder Borstenreihe 34. Jedoch befinden sich die freien Enden der Borsten 20 nicht mehr auf einer einzigen konischen Mantelfläche, sondern sie enden in zwei entgegengesetzt gerichteten konischen Mantelflächen, welche mit ihrem kleineren Durchmesser von den axialen Enden des Borstenfeldes 26 ausgehen und sich wenigstens annähernd mittig treffen.

Selbstverständlich sind auch andere Ausbildungen des Borstenfeldes 26 mit dem gezeigten Spritzgusswerkzeug 42 möglich, so auch die in den Figuren 1 bis 11 gezeigte; es ist einzig die Borstenfeldkavität 50 entsprechend auszubilden.

Weiter ist, wie dies den Figuren 16 bis 18 entnehmbar ist, der Griff 16' quaderförmig mit gerundeten Kanten ausgebildet. Entsprechend ist die vom zweiten Werkzeugteil 46 gebildete Griffkavität 68 geformt. Ansonsten ist die Ausbildung dieselbe wie im Zusammenhang mit den Figuren 12 bis 14 erörtert.

Figur 15 zeigt in perspektivischer Darstellung drei der sechs Borstenfeld-Werkzeugteile 48, welche sich im geschlossenen Zustand befinden. Die übrigen drei Borstenfeld-Werkzeugteile 48 und auch das Kappenwerkzeugteil 80 sind nicht dargestellt, um den Blick in das Innere des Spritzgusswerkzeugs 42 zu ermöglichen. Weiter ist in der Figur 15 eines der zwei balkenförmig ausgebildeten Halswerkzeugteile 56 gezeigt, welches in Schliessstellung des zweiten Werkzeugteils 46 in axialer Richtung an den Borstenfeld-Werkzeugteilen 48 d.h. der Stirnseite 52 anliegt, derart, dass die Borstenfeldkavitätsöffnung 54 bei der ersten Halskavitätsöffnung 60 liegt. Weiter ist in Figur 15 die eine Hälfte der Halskavität 58 gezeigt, in welche der diesem Halswerkzeugteil 56 zugeordnete Klemmstempel 64 hineinragt. Die beiden Halswerkzeugteile 56 sind (die Klemmstempel 64 ausgenommen), zumindest an der Schnittstelle gegengleich geformt und begrenzen im geschlossenen Zustand des Spritzgusswerkzeugs 42 die Halskavität 58. Das gegengleiche Formen ist vorteilhaft, um im Spritzgiess-Prozess beim Einbringen des Kunststoffs eine gleichmässige Füllung zu ermöglichen.

Auf der dem Halswerkzeugteil 56 abgewandten Seite der Borstenfeld-Werkzeugteile 48 liegt an diesen das Kappen-Werkzeugteil 80 an, welches eine Kappenkavität 82 zur Formung der Verlängerung 30, welche das freie Ende des Tragkerns 24 abdeckt, beim Einspritzen des Kunststoffs formt; siehe auch Figuren 1 bis 11 . Das Kappen-Werkzeugteil 80 beziehungsweise die Kappenkavität 82 sind vorzugsweise einteilig geformt. Das heisst, dass die Kappenkavität 82 als Sackloch gestaltet ist und die Entformung nur in Längsrichtung 22 möglich ist. Deshalb wird dieses Teil im Prozess in Längsrichtung 22 von den Borstenfeld-Werkzeugteilen 48 weggefahren, bevor das Borstenfeld 26 aus dem restlichen ersten Werkzeugteil 44 ausgefahren werden kann.

Weiter ist in der Figur 15 der Tragkern 24 gezeigt, welcher durch die Halskavität 58 und die Borstenfeldkavitätsöffnung 54 in die Borstenfeldkavität 50 in Längsrichtung 22 eingeführt worden ist, nachdem die Borstenfeld-Werkzeugteile 48 in den geschlossenen Zustand überführt worden sind.

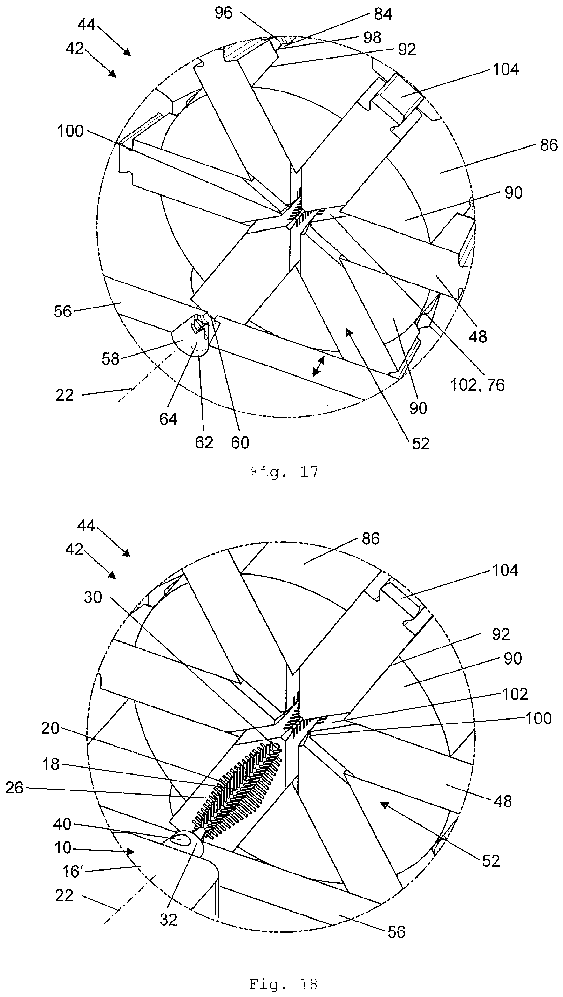

Weiter sind in der Figur 16 schwalbenschwanzartige Führungsschlitze 96 für die Borstenfeld-Werkzeugteile 48 dargestellt. Die zugehörigen Radialführungen 84 sind an einem Tragkörper 86 ausgebildet, dessen Aufbau auch den Figuren 17 und 18 entnehmbar ist.

Nur der Vollständigkeit halber sei erwähnt, dass die Trennebenen 76 wiederum in den Längsmittelebenen 78 der Borstenreihen 34 liegen. Weiter weisen Borstenfeld-Werkzeugteile 48 Stützelemente 74 auf (vergleiche Figur 14), welche der Zentrierung des Tragkerns 24 in der Borstenfeldkavität 50 dienen.

Die Figur 16 zeigt in gleicher Darstellung wie Figur 15 eine im Spritzgusswerkzeug 42 hergestellte Interdentalbürste 10. Im durch die beiden Klemmstempel 64 vom Kunststoff beim Spritzgiessen frei gehaltenen Durchlass 40 im Halsmantel 32 ist einerseits der frei liegende Fixierabschnitt 88 des Tragkerns 24 (siehe auch Figuren 2 , 4 , 7 , 11 und 14) und andererseits der eine Klemmstempel 64 sichtbar, welcher noch in Klemmstellung gezeigt ist.

In der Figur 17 ist der erste Werkzeugteil 44 im geöffneten Zustand dargestellt. Der walzenförmige Tragkörper 86 weist (auf der Stirnseite 52) eine rechtwinklig zur Längsrichtung 22 verlaufende Stirnebene 90 auf, welche den Halswerkzeugteilen 56 zugewandt ist. Der Tragkörper 86 weist bezüglich der Längsrichtung 22 in radialer Richtung verlaufende und in Umfangsrichtung gleichmässig verteilte, im vorliegenden Beispiel sechs Führungsnuten 92 auf, welche in der Stirnebene 90 offen sind. In jede dieser Führungsnuten 92 ist ein Borstenfeld-Werkzeugteil 48 eingesetzt, welches darin in radialer Richtung verschiebbar gelagert ist.

In den Figuren 15 und 16 (in den Figuren nicht gezeigt) sind die Seitenflächen der Führungsnuten 92, welche an den Seitenflächen 94 der Borstenfeld-Werkzeugteile 48 anliegen, mit schwalbenschwanzförmigen Radialführungen 84 versehen. Nur der Vollständigkeit halber sei erwähnt, dass selbstverständlich die Borstenfeld-Werkzeugteile 48 entsprechend gegengleich geformte Führungsschlitze 96 aufweisen, in welche die Radialführungen 84 eingreifen. Die genannten Führungsschlitze sind in Fig. 15 und 16 gezeigt.

In den Figuren 17 und 18 sind die radialen Führungsschlitze 96 (pro Führungsnut 92 und Seitenfläche 94 ein Führungsschlitz 96), welche schwalbenschwanzartig einen Hinterschnitt aufweisen, von einem Boden 98 her ausgebildet. In diesen Führungsschlitzen 96 der Borstenfeld-Werkzeugteile 48 sind die entsprechend gegengleich geformten Radialführungen 84 des Tragkörpers 86 geführt, wobei jedes Borstenfeld-Werkzeugteil 48 zwei Führungsschlitze 96 aufweist, es ist in den Figuren lediglich jeweils nur eine sichtbar.

Bei der Ausführungsform (Figuren 15 bis 18) ist die Aufgabe der Kombinationen bestehend aus Führungsschlitzen 96 und Radialführungen 84, die Borstenfeld-Werkzeugteile 48 im Tragkörper 86 in axialer Richtung bezüglich der Längsrichtung 22 in Position zu halten und in radialer Richtung translatorisch bewegbar zu führen.

Die Borstenfeld-Werkzeugteile 48 sind quaderförmig ausgebildet, wobei bei der in der Figuren 15 bis 18 gezeigten Ausführungsform jeweils zwei einander gegenüber liegende Seiten (Breitseiten) mit den Führungsschlitzen 96 versehen sind.

Im in radialer Richtung innen liegenden Endbereich sind die Borstenfeld-Werkzeugteile 48 giebeldachartig geformt, wobei die Giebel 100 in Längsrichtung 22 verlaufen und die Dachflächen 102 die Trennebenen 76 bilden. Das heisst, in geschlossenen Zustand liegen die Dachflächen 102 benachbarter Borstenfeld-Werkzeugteile 48 aneinander an. Die Giebel 100 bilden im geschlossenen Zustand der Borstenfeld-Werkzeugteile zusammen jenen Teil der Borstenfeldkavität 50, welche den Borstentragstamm 18 ausbildet.

In den Dachflächen 102 sind entsprechend nutenartige Vertiefungen ausgebildet, welche im geschlossenen Zustand der Borstenfeld-Werkzeugteile 48 den den Borsten 20 zugeordneten Teil der Borstenfeldkavität 50 bilden. Die Dachflächen 102 bilden so einen Teil der Borstenfeldkavität 50.

Im radial aussen liegenden Endbereich weisen die Borstenfeld-Werkzeugteile 48 schwalbenschwanzartige Führungsvorsprünge 104 auf, welche in ihrer gedachten Verlängerung mit der Längsachse 22 einen spitzen Winkel einschliessen. Die Führungsvorsprünge 104 sind in gegengleich ausgebildeten Gleitnuten eines Steuerrings geführt, welcher den Tragkörper 68 umgreift und in axialer Richtung mittels eines Antriebselements hin und her verschiebbar ist. In der einen axialen Endstellung des Steuerrings befinden sich die Borstenfeld-Werkzeugteile 48 aneinander anliegend im geschlossenen Zustand und bilden die Borstenfeldkavität 50, wie in den Figuren 15 und 16 reduziert gezeigt. In der anderen Endlage des Steuerrings befinden sich die Borstenfeld-Werkzeugteile 48 radial aussen in geöffneter Stellung, wie dies in den Figuren 17 und 18 gezeigt ist.

Wie dies aus den Figuren 17 und 18 im Vergleich mit den Figuren 15 und 16 weiter hervorgeht, sind die Halswerkzeugteile 56 relativ zu den Borstenfeld-Werkzeugteilen 48 und auch dem Tragkörper 86 in Längsrichtung 22 verschiebbar gelagert; Längslagerungen sind allgemein bekannt und der besseren Übersichtlichkeit halber nicht dargestellt. Auch Antriebsorgane für die Bewegung von Werkzeugteilen sind allgemein bekannt und nicht dargestellt.

In Figur 18 befindet sich der erste Werkzeugteil 44 ebenfalls in Offenstellung, wobei jedoch zusätzlich, wie in Figur 16 , eine mit dem Spritzgusswerkzeug 42 hergestellte Interdentalbürste 10 gezeigt ist. Diese ist noch von den Halswerkzeugteilen 56, welche sich noch in Schliessstellung befinden, wovon jedoch nur eines der Halswerkzeugteile 56 gezeigt ist, gehalten.

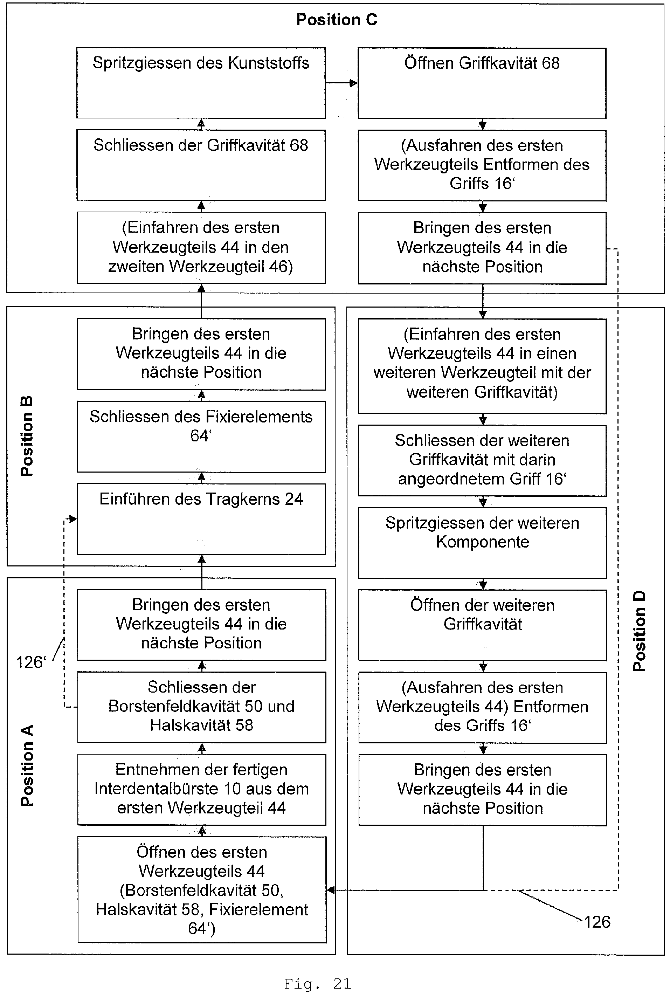

Die Arbeitsweise des Spritzgusswerkzeugs 42 ist weiter unten im Zusammenhang mit der Fig. 21 beschrieben.

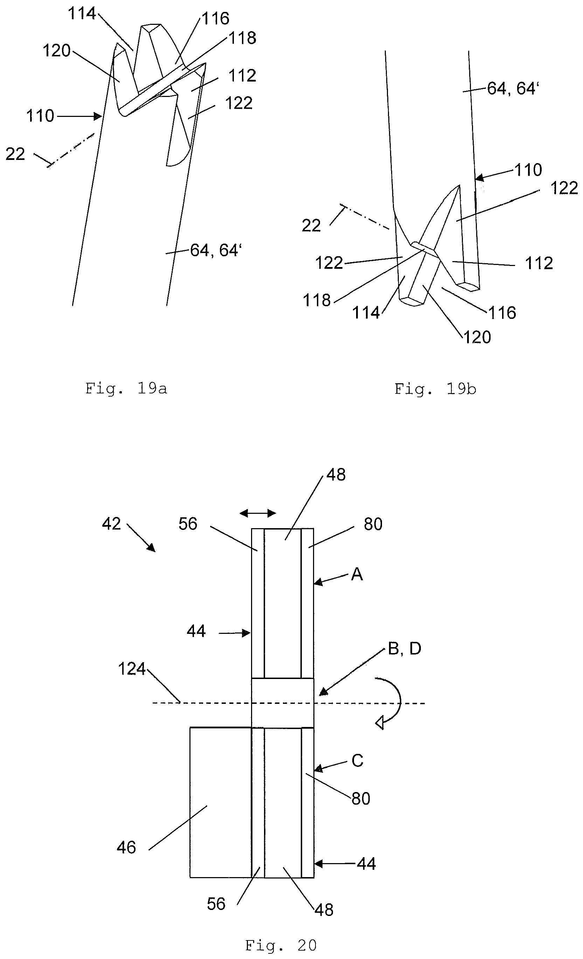

Die Figuren 19a und 19b zeigen eine bevorzugte Ausführungsform der beiden ein Fixierelement 64' bildenden Klemmstempel 64.

Die Klemmstempel 64 weisen in ihren einander zugewandten Endbereichen 110 Zähne 112 und gegengleich geformte Zahnlücken 114 auf, wobei in Klemmstellung die Zähne 112 in die Zahnlücken 114 des jeweils anderen Klemmstempels 64 eingreifen.

Im gezeigten Ausführungsbeispiel weisen die Klemmstempel 64 einen kreisprofilförmigen Querschnitt auf, wobei die einander zugewandten Enden mit einer im Querschnitt v-förmigen und in Längsrichtung 22 verlaufenden Stempelausnehmung 116 versehen sind.

Im Grunde der Stempelausnehmung 116 weisen die Klemmstempel 64 je eine in Längsrichtung 22 verlaufende Rinne 118 auf, wobei die beiden Rinnen, in Klemmstellung der Klemmstempel 64, im Wesentlichen der Aussenkontur des Tragkerns 24 entsprechen, jedoch derart ausgebildet sind, dass in Klemmstellung der Klemmstempel 64 der Tragkern 24 von den Rinnen 118 klemmend gehalten werden kann.

Beim in Figur 19a gezeigten Klemmstempel 64 sind die durch die Stempelausnehmung 116 gebildeten Flanken 120, in Längsrichtung 22 mittig, durch eine Querausnehmung 122 in jeweils zwei Zähne 112 unterteilt. Die Querausnehmungen 122 bilden in den Flanken 120 Zahnlücken 114, welche gegengleich den am in Figur 19b gezeigten Klemmstempel 64 ausgebildeten Zähnen 112 geformt sind.

Beim in der Figur 19b gezeigten Klemmstempel 64 sind die beiden durch die Stempelausnehmung 116 gebildeten Flanken 120 durch zwei in Längsrichtung 22 aussen liegende Querausnehmungen 122 zu je einem Zahn 112 geformt. Diese Querausnehmungen 122 sind gegengleich der Zähne 112 des in der Figur 19a gezeigten Klemmstempels 64 geformt.

Werden die beiden in einer gemeinsamen Achse liegenden Klemmstempel 64 aufeinander zu bewegt, kommen die beiden Zähne 112 des in der Figur 19b gezeigten Klemmstempels 64 in Eingriff mit den Zahnlücken 114 des in der Figur 19a gezeigten Klemmstempels 64. Entsprechend kommen die vier Zähne 112 des in der Figur 19a angezeigten Klemmstempels 64 in die aussen liegenden Zahnlücken 114 des in der Figur 19b gezeigten Klemmstempels 64 in Eingriff.

In Klemmstellung wird somit der Tragkern 24 im Fixierabschnitt 88 von den Klemmstempeln 64 vollständig umschlossen. Überdies bilden die beiden Klemmstempel 64 in Klemmstellung ein durchgehendes Profil, welches beim Spritzgiessen der Ausbildung des Durchlasses 40 dient.

Die Figur 20 zeigt schematisch eine mögliche Ausführungsform für das Spritzgusswerkzeug 42 mit einem einzigen stationär angeordneten zweiten Werkzeugteil 46 und vier zweiten Werkezugteilen 46, welche um eine Drehachse 124 drehbar und jeweils nach einer Drehung um 90° nacheinander zum zweiten Werkzeugteil 46 bewegbar sind.

Der zweite Werkzeugteil 46 weist die beiden Griffwerkzeugteile 66 auf, welche in geschlossenem Zustand die Griffkavität 68 ausbilden. An dieser Stelle sei erwähnt, dass die ersten Werkzeugteile 44 und der zweite Werkzeugteil 46 jeweils mehrere entsprechende Kavitäten ausbilden kann, um gleichzeitig mehrere Interdentalbürsten herzustellen, wie dies aus der Zahnbürstenproduktion allgemein bekannt ist.

Jedes der ersten Werkzeugteile 44 weist auf der dem zweiten Werkzeugteil 46 zugewandten Seite die beiden Halswerkzeugteile 56 auf, welche im geschlossenen Zustand die Halskavität 58 beziehungsweise die Halskavitäten 58 ausbilden. Auf der vom zweiten Werkzeugteil 46 abgewandten Seite weist jeder erste Werkzeugteil 44 einen Kappenwerkzeugteil 80 mit der entsprechenden Kappenkavität beziehungsweise Kappenkavitäten 82 auf. Zwischen den Halswerkzeugteilen 56 und dem betreffenden Kappenwerkzeugteil 80 befinden sich jeweils die Borstenfeld-Werkzeugteile 48. Die ersten Werkzeugteile 44 sind, wie weiter oben beschrieben und in den vorgängigen Figuren dargestellt, ausgebildet. Die Halswerkzeugteile 56 sind relativ zu den Borstenfeld-Werkzeugteilen 48 in Richtung des gezeigten Doppelpfeils - somit in Richtung der Drehachse 124 beziehungsweise der Längsrichtung 22 - bewegbar.

Die Ausführung des Spritzgusswerkzeugs 42 gemäss Figur 20 ermöglicht kurze Zykluszeiten zur Herstellung der Interdentalbürsten 10. Da jeder erste Werkzeugteil 44 vier verschiedene Positionen einnimmt, in welchen jeweils unterschiedliche Handlungen vorgenommen werden können, wie dies im Zusammenhang mit der Figur 21 im Folgenden dargelegt ist.

In einer ersten Position A wird die Borstenfeldkavität 50 geschlossen, indem die Borstenfeld-Werkzeugteile 48 in den geschlossenen Zustand überführt werden. Weiter werden die Halswerkzeugteile 56 aufeinander zu in Schliessstellung verbracht und in Längsrichtung 22 in Anlage an die Borstenfeld-Werkzeugteile 48 bewegt. Die Klemmstempel 64 bzw. das Fixierelement 64' werden von einander beabstandet in Ruhestellung, ausserhalb der Halskavität 58, gehalten.

Dann wird dieser erste Werkzeugteil 44 - bei der in der Figur 20 gezeigten Ausführungsform durch Drehen um 90° um die Drehachse 124 - in eine zweite Position B verbracht. In dieser zweiten Position B wird der Tragkern 24 durch die Halskavität 58 und dann die Borstenfeldkavitätsöffnung 54 hindurch in Längsrichtung 22 in die geschlossene Borstenfeldkavität 50 eingeführt, wonach die Klemmstempel 64 aufeinander zu bzw. das Fixierelement 64' in Klemmstellung verbracht werden.

Der Tragkern 24 kann dabei dem Prozess als bereits in der korrekten Länge vorliegendes Teil (beispielsweise geschnittenes Teil) oder als Endlos-Teil zugeführt werden. Dabei ist es im zweiten Fall nötig, den Tragkern 24 im Prozess noch auf die korrekte Länge zuzuschneiden. Weiter ist es auch möglich, den Tragkern 24 aus einem Kunststoffmaterial zu formen und dies beispielsweise in einem separaten oder integrierten Spritzgiessprozess, damit könnte eine Interdentalbürste komplett aus Kunststoff gefertigt werden.

Dann erfolgt das Verbringen, wiederum durch Drehung, des ersten Werkzeugteils 44 mit dem darin eingeführten und festgehaltenen Tragkern 24 in eine dritte Position C, in welcher der erste Werkzeugteil 44 sich beim zweiten Werkzeugteil 46 befindet. Die Griffkavität 68 wird durch aufeinander zu bewegen der Griffwerkzeugteile 66 geschlossen. Weiter wird der erste Werkzeugteil 44 und der zweite Werkzeugteil 46 aufeinander zu bewegt und aneinander anliegend in Position gebracht, so dass die Griffkavität 68 zusammen mit der Halskavität 58 und der Borstenfeldkavität 50 inklusive Kappenkavität 82 die Spritzkavität 72 bilden.

Dann wird der Kunststoff in die Griffkavität 68 eingespritzt, wodurch in der Griffkavität 68 der Griff 16', in der Halskavität 58 der Halsmantel 32, in der Borstenfeldkavität 58 die Ummantelung 28 sowie die Borsten 20 und die Verlängerung 30 in der Kappenkavität 82 ausgebildet werden.

Ist der Kunststoff wenigstens soweit ausgehärtet, dass er formbeständig ist, wird die Griffkavität 68 durch voneinander weg bewegen der Griffwerkzeugteile 66 geöffnet. Dadurch wird der Griff 16' entformt. Weiter werden der erste Werkzeugteil 44 und der zweite Werkzeugteil 46 voneinander weggefahren. Anschliessend wird das erste Werkzeugteil 44 durch drehen in eine vierte Position D verbracht.

In dieser Position D besteht die Möglichkeit, an dem bereits hergestellten Griff 16' eine zweite Komponente, beispielsweise aus Hart- oder Weichkomponente anzuspritzen. Falls dies gewünscht ist, befindet sich bei dieser vierten Position D ein dritter Werkzeugteil des Spritzgusswerkzeugs 42, welcher gleich dem zweiten Werkzeugteil 46 ausgebildet sein kann, wobei jedoch einzig die Kavitäten neben der Aufnahme für den bereits hergestellten Griff 16' für das Anspritzen der weiteren Komponente ausgebildet sind.

Der bereits hergestellte Griff 16' steht über die Halswerkzeugteile 56 vor und gelangt in der vierten Position D in die betreffende Kavität. Die Werkzeugteile werden aneinander gefahren, die Kavität wird geschlossen und dann wird die zweite Komponente angespritzt. Nach wenigstens teilweisem Aushärten dieser Komponente wird die weitere Griffkavität geöffnet und anschliessend wird der erste Werkzeugteil 44 wieder in die erste Position, die Position A, verbracht. In dieser werden die Borstenfeld-Werkzeugteile 48 in den geöffneten Zustand überführt, wodurch der Borstenfeldabschnitt 12 und der Griffabschnitt 16 der Interdentalbürste 10 frei liegt.

Durch Bewegen der in Schliessstellung befindenden Halswerkzeugteile 56 in Längsrichtung 22 von den Borstenfeld-Werkzeugteilen 48 weg, wird die Interdentalbürste 10 der Borstenfeldkavität 50 entnommen. Anschliessend werden die Halswerkzeugteile 56 und die Klemmstempel 64 bzw. die Fixierelemente 64' voneinander wegbewegt und vorher, gleichzeitig oder nachher die Klemmstempel 64 in ihre Ruhestellung überführt. Die Interdentalbürsten 10 sind frei und können beispielsweise mittels eines Greifers (beispielsweise an einem Roboter) dem Spritzgusswerkzeuge 42 entnommen werden.

Je nach Ausgestaltung hält der Greifer die Interdentalbürsten 10 bereits beim Öffnen der Halswerkzeugteile 56 und der Klemmstempel 64. Als weitere Ausgestaltung bietet sich, je nach Aufbau des Spritzgusswerkzeugs, an, die hergestellten Teile einfach fallen zu lassen.

Anschliessend wird der erste Werkzeugteil 44 respektive werden seine Teile wieder wie anfangs beschrieben geschlossen und ein neuer Herstellungszyklus kann beginnen.

Die in der Figur 20 dargestellte Ausführungsform mit vier ersten Werkzeugteilen 44 hat somit den Vorteil der grossen Herstellungskapazität, wobei während die erste Komponente einer Interdentalbürste 10 gespritzt wird in den übrigen Positionen Handlungen vorgenommen werden.

Ist nicht vorgesehen, dass eine zweite Komponente an den Griff 16' angespritzt wird, so kann auf die vierte Position D verzichtet werden, wie dies in der Figur 21 mit einer gestrichelten Linie 126 dargestellt ist. In diesem Fall weist das Spritzgusswerkzeug 42 vorteilhafterweise drei erste Werkzeugteile 44 auf, welche von Position zu Position bevorzugt um jeweils 120° um die Drehachse 124 gedreht werden.

In dem Fall ist es aber beispielsweise auch möglich, die Aktivitäten von einer Position auf mehrere Positionen aufzuteilen. Beispielsweise bei Position A können das Öffnen und die Produktentnahme gruppiert und vom Schliessen und Zusammenführen der Werkzeugteile separiert werden.

Weiter ist es denkbar, wie in Figur 21 mit der gestrichelten Linie 126' angedeutet, den Tragkern 24 in der ersten Position A in die geschlossene Borstenfeldkavität 50 einzuführen.

In diesem Fall ist es von Vorteil - falls keine zweite Komponente an den Griff 16' angespritzt werden muss - zwei erste Werkzeugteile 44 vorzusehen, welche jeweils um 180° um die Drehachse 124 in die entsprechenden Positionen (A, C) gedreht werden. Ist jedoch das Anspritzen einer zweiten Komponente vorgesehen, weist das Spritzgusswerkzeug 42 entsprechend bevorzugt drei erste Werkzeugteile 44 auf.

Bevorzugt sind die jeweils ersten Werkzeugteile 44, in Art der Blätter eines Helikopterrotors, gleichmässig in Umfangsrichtung zur Drehachse 124 verteilt angeordnet und an einem zentralen Drehteil befestigt.

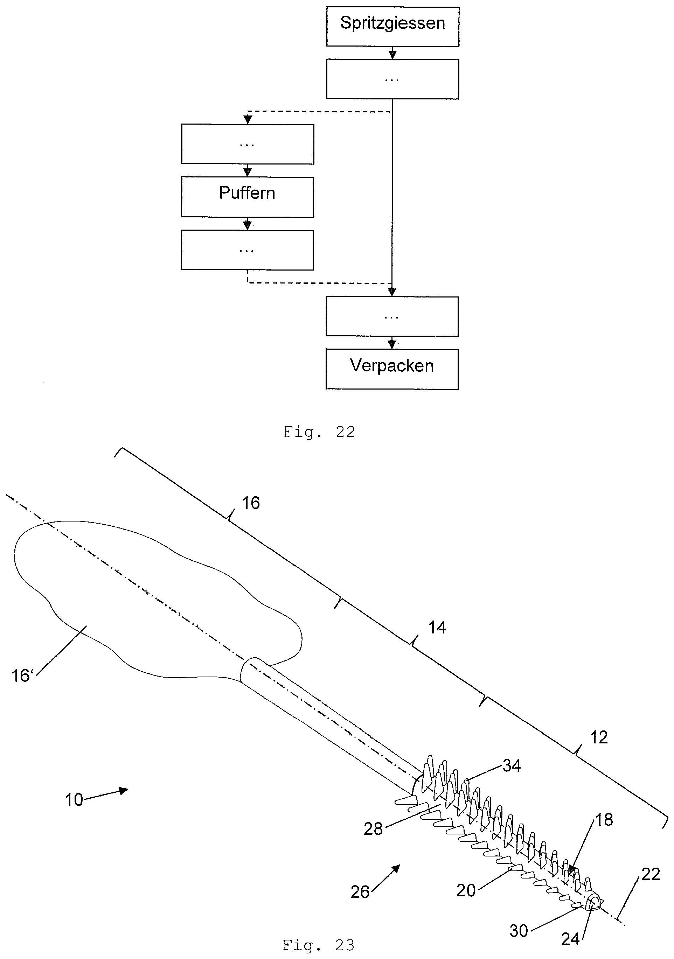

Auf mögliche Weiterbearbeitungen der wie oben beschrieben hergestellten Interdentalbürsten 10 wird in Zusammenhang mit Figur 22 eingegangen.

In Figur 22 wird gezeigt, wie der Spritzgiessprozess und die weiteren Herstellschritte in den gesamten Herstellprozess integriert werden, wenn eine sogenannte Inline-Lösung im Herstellprozess verwendet wird, d.h. die Herstellschritte werden direkt miteinander verknüpft. Die Vorteile, die diese Herstellmethode bringt, liegen auf der Hand. Beispielsweise sind diese ökonomischer Natur, es ist keine Zwischenlagerung nötig, ein Beschädigen des Borstenfeldes kann quasi ausgeschlossen werden.

Beispielsweise ist es möglich, die gespritzten Interdentalbürsten 10 in mehreren Schritten nach zu bearbeiten und anschliessend direkt zu verpacken. Weiter ist es möglich, zwischen den mehreren Bearbeitungsschritten eine Pufferung vorzusehen. Die Pufferung dient dazu, Schwankungen in der Leistung zwischen den vorgängigen und den nachfolgenden Prozessschritten abzufedern.

So ist es möglich, dass die gespritzten Interdentalbürsten 10 in einem nächsten Schritt, nach dem Spritzgiessen, beispielsweise mit einer Beschriftung versehen werden, beispielsweise durch Prägen oder Bedrucken. Die Nachbearbeitung kann auch das Borstenfeld betreffen, beispielsweise kann die Interdentalbürste 10 noch eine Krümmung des Borstentragstammes 18 erfahren. Die Behandlung des Borstenfeldes 26 mit Substanzen, beispielsweise Zahnlösungen, Zahnpasten oder Desinfektionsmittel, ist ebenso möglich. Eine Einwirkung von Wärme auf das Borstenfeld 26 ist ebenso möglich wie eine Verdrehung des Borstenfeldes 26, dass es eine Torsionsform erhält.

Die genannten Bearbeitungen sind vor oder nach dem Puffern oder auch direkt vor dem Verpacken der Interdentalbürsten 10 möglich.

Inline sind auch weitere Bearbeitungen möglich, bevor die Interdentalbürsten 10 verpackt werden.

Es ist auch denkbar, die hergestellten Interdentalbürsten 10 offline weiter zu verarbeiten. Dazu können die einzelnen Schritte komplett getrennt sein und unabhängig voneinander stattfinden. Dabei ist es möglich, dass jedes Zwischenprodukt gelagert wird, bevor es weiterverarbeitet wird.

Neben der erklärten Variante, dass das Produkt komplett im Spritzgiesswerkzueg hergestellt wird und ein "Stand-Alone" Produkt ist, ist es auch möglich, nicht das komplette Produkt herzustellen. Dabei ist es möglich, anstelle des kompletten Griffs 16' eine Schnittstellengeometrie zu gestalten, die auf ein gegengleich geformtes Teils eines Handgriffs passt. Dabei ist das Bürstenteil auswechselbar und wird in den Handgriff eingeklickt oder anderswie wieder lösbar befestigt.

Daneben ist es auch möglich, die Interdentalbürste möglichst identisch zu einer bestehenden eingedrehten Bürste zu gestalten, beispielsweise so, dass aus Kunststoff ein Stiel im Spritzgussverfahren hergestellt wird. Damit kann erreicht werden, dass bestehende eingedrehte Bürsten ohne Bürstengriff 1:1 ersetzt werden können. Dies kommt beispielsweise in Griffen zur Anwendung, in die einfache eingedrehte Bürsten eingeführt werden können, wobei die eingedrehten Bürsten durch abknicken der Verlängerung des Borstentragstamms gehalten/geklemmt werden.

Es ist auch möglich, für die Herstellung genannter Interdentalbürsten das Co-Injection Verfahren anzuwenden. Das würde bedeuten, dass für die Herstellung in der ersten Kavität des Spritzgiesswerkzeugs zwei Komponenten eingespritzt werden. Konkret wird eine erste Komponente eingespritzt, diese füllt aber die Kavität nicht komplett. Nach teilweisem verhärten wird eine zweite Materialkomponente über denselben Anspritzpunkt eingespritzt sodass diese Komponente entweder die bestehende teilweise Komponente verdrängt und diesen Platz im Innern der bestehenden Komponente einnimmt oder dass die zusätzliche Komponente die bestehende Komponente durchbricht. So ist es möglich ein Zweikomponententeil in einer einzigen Spritzgiesskavität herzustellen. Auf diese Weise können beispielsweise Griff und Borsten verschiedene Farben aufweisen oder es können für Griff und Borsten verschiedene Materialien eingesetzt werden.

In den Figuren 23 bis 29 ist eine Variante einer Interdentalbürste 10 gezeigt, in welcher auch der Tragkern 24 aus einem Kunststoff im Spritzgussverfahren hergestellt ist.

Die gezeigte Interdentalbürste 10 weist einen Borstenfeldabschnitt 12 mit einem Borstenfeld 26, einen Halsabschnitt 14 mit einem Halselement 32 sowie einen Griffabschnitt 16 mit einem Griff 16' auf. Ein Borstentragstamm 18, von welchem die Borsten 20 abstehen, erstreckt sich auch bei dieser Variante geradlinig über die gesamte Länge des Borstenfeldabschnitts 12 und legt eine Längsrichtung 22 fest; die die Längsrichtung 22 angebende strichpunktierte Linie definiert wiederum die Längsachse.

Vorliegend sind der Griff 16', das Halselement 32 und der Tragkern 24 integral aus einem Kunststoff gespritzt. Der sich, an der vom Griff 16' abgewandten Seite, an das Halselement 32 anschliessende Tragkern 24 weist einen geringeren Durchmesser auf als das Halselement 32, vorzugsweise verjüngt sich der Tragkern 24 mit zunehmender Entfernung vom Hals 32. Um den Tragkern 24 herum ist eine Ummantelung 28 gespritzt, welche mit einer kappenartigen Verlängerung 30 das dem Halsabschnitt 14 abgewandte freie Ende des Tragkerns 24 umschliesst.

Der Griff 16' weist im Hinblick auf eine möglichst effiziente Handhabung eine abgeflachte Form auf. Die abgeflachte Form kann etwa in Form eines Plättchens vorliegen, welches ggf. auf der Oberund/oder Unterseite muldenförmige Einbuchtungen zur Aufnahme von Fingerkuppen aufweist (nicht gezeigt). In den muldenförmigen Einbuchtungen können auch Noppen angeordnet sein, um die Griffigkeit weiter zu erhöhen. Zusammen mit der Ummantelung 28 werden die Borsten 20 bzw. wird das Borstenfeld 26 gespritzt. Die Ummantelung 28 und das Borstenfeld 26 sind dabei vorzugsweise aus einem anderen Kunststoffmaterial gespritzt als der Griff 16', das Halselement 32 und der Tragkern 24. Der Griff 16' kann auserdem für eine bessere Ergonomie/Funktionalität mit einer weiteren Kunststoffkomponente, insbesondere einer Weichkomponente, versehen sein.

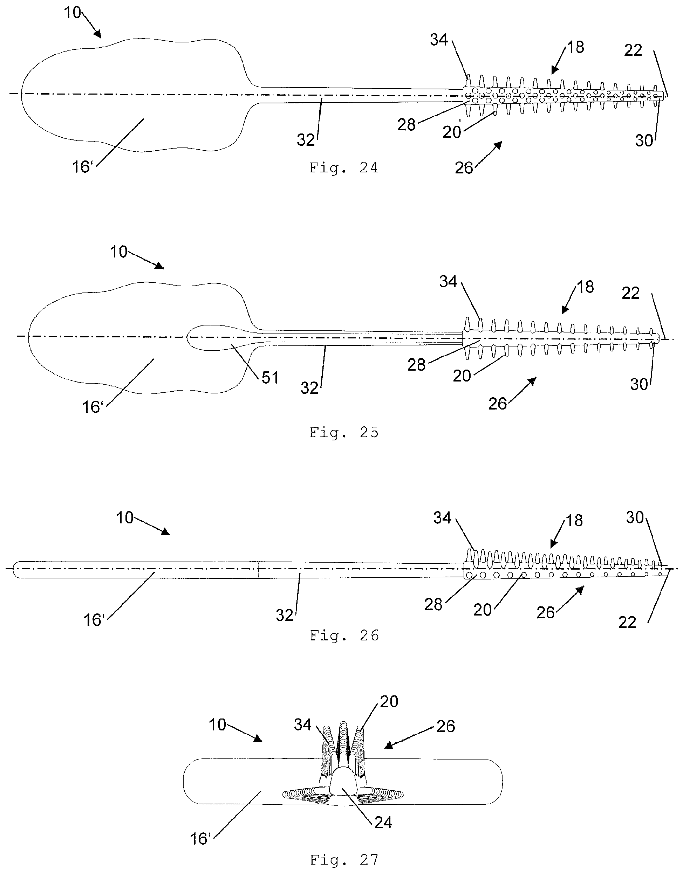

Vorliegend besteht das Borstenfeld 26 aus Borsten 20, die im Wesentlichen von drei Seiten (bzw. drei seitlichen Abschnitten) der Interdentalbürste 10 abstehen. Eine Seite (bzw. ein seitlicher Abschnitt) bleibt bei dieser Variante borstenlos. Wie zu sehen, stehen die Borsten 20 jeweils nicht radial von der Längsachse 22 des Tragkerns 24 ab, vielmehr sind die einzelnen, in Längsrichtung 22 verlaufenden, Borstenreihen 34 jeweils wenigstens annährend parallel oder in einem 90° Winkel zueinander angeordnet. Wie etwa in Figur 27 zu erkennen, folgen die oberen drei, annährend parallelen, Borstenreihen 34 der Verjüngung des Tragkerns 24 bzw. der Ummantelung 28 (welche regelmässig eine konstante Dicke aufweist und daher ebenfalls mit entsprechender Verjüngung um den Tragkern 24 herum verläuft) und laufen etwas spitz zusammen während die seitlichen Borstenreihen senkrecht von dem Tragkern 24 abstehen und in einer gemeinsamen Ebene liegen. Selbstverständlich sind auch in dieser Variante anderweitige Winkelkonstellationen zwischen den Borstenreihen 34 denkbar.

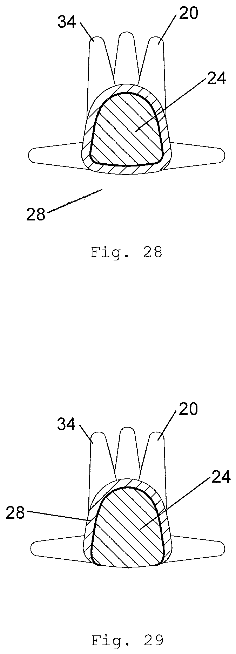

In Figur 29 ist ein zu den Figuren 23-28 alternativer Querschnitt im Bereich zwischen den Borstenreihen gezeigt. Dabei tritt der Tragkern 24 im Bereich des Borstenfeldabschnitts 12 aus der Ummantelung aus und bildet so zumindest einen Teil der eigentlichen Rückseite des Borstenfeldes 26. Der Tragkern 24 ist hier also mit Ausnahme der unteren Seite von einer teilweisen Ummantelung bzw. Schicht 28 umgeben.

Der Tragkern 24 ist bevorzugt in Form eines abgerundeten Trapezes ausgestaltet. Der Tragkern kann aber auch dreieckig ausgestaltet sein und auf zwei Seiten komplett und auf einer Seite gar nicht oder nur teilweise von der Ummantelung 28 umgeben sein. Der Tragkern kann allerdings auch einen runden Querschnitt aufweisen.

Der Tragkern 24 kann demzufolge auch eine dreidimensionale Geometrie ausbilden, welche von den vorherigen Ausführungsformen abweicht, da er zusammen mit dem Griff 16' der Interdentalbürste 10 geformt wird.

Die Herstellung einer Interdentalbürste 10 gemäss den Figuren 23 bis 29 ist etwas einfacher als jene der vorherigen Ausführungsformen. Der Tragkern 24 kann beispielsweise in einer Kavität eines Spritzgiesswerkzeugs hergestellt werden, in welchem später im Zweioder Mehrkomponentenspritzgiessverfahren auch das Borstenfeld hergestellt wird. Dabei wird, wie in den vorhergehenden Ausführungsformen, der Tragkern 24 in Längsrichtung 22 durch die Borstenfeldkavitätsöffnung 54 in die geschlossene Borstenfeldkavität 50 eingeführt. Weiter ist es auch möglich, den Tragkern 24 in einem separaten Spritzgiesswerkzeug herzustellen und anschliessend dem Spritzgiesswerkzeug, in welchem das Borstenfeld geformt wird, zuzuführen und entsprechend in die Spritzgiesskavität einzulegen.

Die Fixierung des Tragkörpers 24 im Spritzgiesswerkzeug erfolgt bevorzugt im Bereich des Griffs 16', an Stellen an denen nur eine Kunststoffkomponente vorhanden ist (d.h. insbesondere nicht an Stellen, an denen etwa auch eine Weichkomponente vorhanden ist). Je nach Ausgestaltung kann die Fixierung alleine vermittels der Wände der Spritzgiesskavität erfolgen - ohne dass hierfür separate Klemmstempel nötig sind. Das Fixierelement wird dann jeweils durch die Kavitätenwand gebildet. Der Anspritzpunkt 51 der Kunststoffkomponente, welche die Ummantelung 28 wie auch die Borsten 20 bildet, befindet sich bevorzugt am vorderen Ende des Griffs 16'. Die Kunststoffkomponente der Ummantelung 28 überdeckt auf diese Weise am Griff 16' einen kleinen Teil der Oberfläche, während sie auf der Rückseite der Interdentalbürste 10 am Halselement 14 einen wesentlichen Teil der Oberfläche einer Seite bedeckt, bevor sie die Oberfläche im Borstenfeldabschnitt 26 schliesslich komplett bedeckt(vgl. Figur 25 ).

Weiterhin besteht die Möglichkeit, die gespritzten Borsten 20 mit eingedrehten Borsten zu kombinieren, sodass beispielsweise im vorderen Teil der Interdentalbürste 10 eingedrehte Borsten vorhanden sind. Hierzu wird ggf. in einem ersten Schritt eine eingedrehte Bürste erzeugt, welche an ihrem vorderen Ende eingedrehte Borsten aufweist und an ihrem hinteren Teil mit verdrilltem Draht ausgestattet ist. Dieses Teil wird in die Spritzgiesskavität eingelegt, geklemmt und vor dem Bereich der eingedrehten Borsten ebenfalls geklemmt. Anschliessend wird der verdrillte Draht umspritzt und mit gespritzten Borsten 20 versehen.

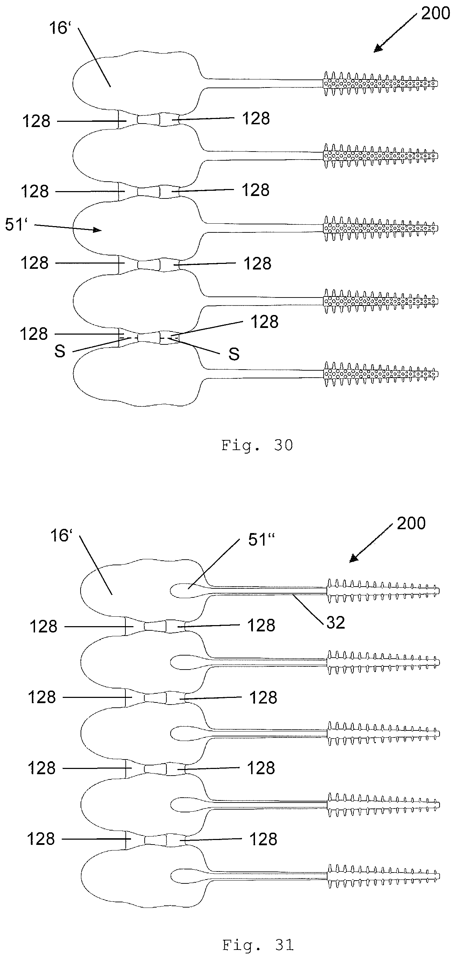

Die in den Figuren 30-31 dargestellte erfindungsgemässe Produktgruppe 200 weist mehrere Bürsten der in den Fig. 23-29 gezeigten Ausführungsformen der Erfindung auf. Vorzugsweise besteht eine Produktgruppe jeweils wie gezeigt aus fünf Bürsten. Wie zu sehen, sind die benachbarten Bürsten dabei im Bereich ihrer Griffe 16' mittels zweier Materialbrücken 128 miteinander verbunden.

Die Materialbrücken 128 sind, je nach Ausgestaltung des Griffs 16', gleich oder verschieden lang. Sie können jeweils auch eine Sollbruchstelle S beispielsweise in Form einer Perforation oder einer Kerbe bzw. Materialschwächung aufweisen, an welcher die einzelnen Bürsten einfach und sauber voneinander getrennt werden können.

Erfindungsgemäss befindet sich der Anspritzpunkt 51" der zweiten Komponente am vorderen, dem Halselement 32 zugewandten, Ende des Griffs 16'. Die zweite Kunststoffkomponente wird mit anderen Worten auf das vordere, dem Halselement 32 zugewandte, Ende des Griffs 16' aufgespritzt, wobei die zweite Kunststoffkomponente am Griff 16' einen kleinen Teil der Oberfläche überdeckt, während sie auf der Rückseite am Halselement 32 einen wesentlichen Teil der Oberfläche bedeckt und die Oberfläche des Tragkerns 24 komplett, oder aber mit Ausnahme einer unteren Seite (vgl. Fig. 29 ), bedeckt.

Die zweite Kunststoffkomponente wird pro Interdentalbürste 10 in einem separaten Anspritzpunkt 51" in das Produkt eingebracht. Die erste Kunststoffkomponente wird über den Anspritzpunkt 51' eingebracht. Hierbei ist es möglich, dass es für eine Produktgruppe nur einen Anspritzpunkt 51' der ersten Komponente gibt, oder aber dass es mehrere Anspritzpunkte 51' gibt. Die Anspritzpunkte sind vorzugsweise regelmässig oder symmetrisch angeordnet bezüglich der Anordnung auf den Produkten der Produktgruppe. Weiter befindet sich der Anspritzpunkt 51' bzw. 51" innerhalb des einzelnen Produkts immer an derselben Position. Pro Kunststoffkomponente wird vorzugsweise nie mehr als ein Anspritzpunkt pro Produkt eingesetzt.

Die weiteren Bauteile/Komponenten entsprechen im Übrigen den in den Fig. 23-29 dargestellten Bauteilen/Komponenten. Für diese Ausführungsform wird regelmässig ein Heisskanalsystem verwendet. Die Verwendung eines Kaltkanalsystems ist denkbar.

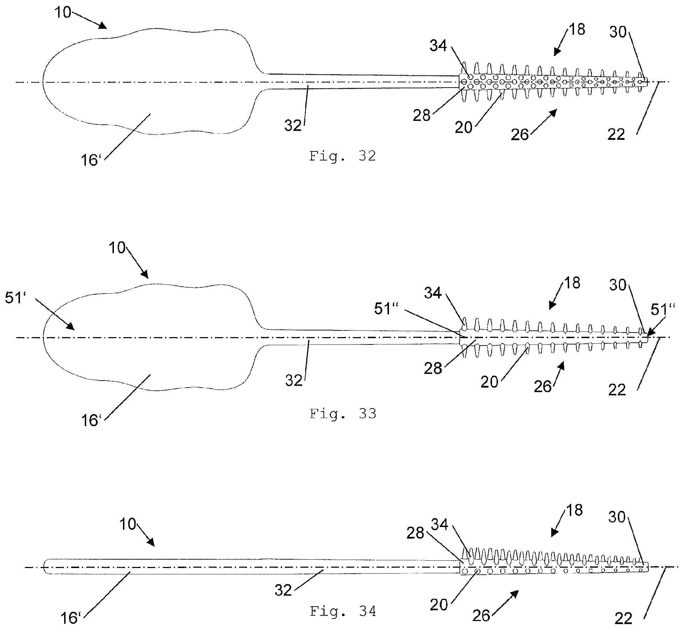

In den Figuren 32-34 wird eine Bürste bzw. Interdentalbürste 10 gezeigt, welche wiederum einen Griff 16' aufweist, von welchem sich das Halselement 32 und der Tragkern (hier von der Schicht/Ummantelung 28 verdeckt) erstrecken. Wie zu sehen, sind auf der Oberseite des Borstenstamms 18 drei zusammenlaufende Borstenreihen 34 (von denen die mittlere entlang der Längsachse 22 verläuft) angeordnet, welche zusammen mit den zwei im Wesentlichen horizontal von dem Tragkern (bzw. Borstenstamm 18) abstehenden Borstenreihen 34 das Borstenfeld 26 definieren.

Die Borsten 20 nehmen dabei in Richtung des dem Halselement 32 abgewandten Endes des Borstenstamms 18 in ihrer Länge ab. Wie insbesondere auch in Fig. 34 zu sehen, sind die zwei Borstenreihen 34, welche im Wesentlichen horizontal von dem Tragkern abstehen in einer Ebene unterhalb der Längsachse 22 des Tragkerns 24 angeordnet.

Aufgrund der Tatsache, dass vorliegend sich der Tragkern, sowie der Borstenstamm 18 in Richtung ihres von dem Halselement 32 abgewandten Endes verjüngen, ist die Ebene, in welcher die im Wesentlichen horizontal angeordneten Borstenreihen liegen, ggf. nicht ganz parallel zu der Längsachse 22. Der Griff 16' der Bürste ist vorliegend flach ausgebildet. Die kappenartige Verlängerung 30 der Schicht/Ummantelung 28 umschliesst wiederum das dem Halselement 32 abgewandte freie Ende des Tragkerns. Der Anspritzpunkt 51" für die zweite Kunststoffkomponente befindet sich entweder am freien Ende des Tragkerns oder aber an dem dem Halselement 32 zugewandten Ende des Tragkerns (d.h. in der Borstenfeldkavitätsöffnung). Auf den Griff 16' und auf das Halselement 32 der einzelnen Bürsten wird keine zweite Kunststoffkomponente aufgebracht. Bei dieser Ausführungsform kommt regelmässig ein Kaltkanalsystem zum Einsatz. Der Anspritzpunkt 51" liegt bevorzugt am freien Ende des Tragkerns.

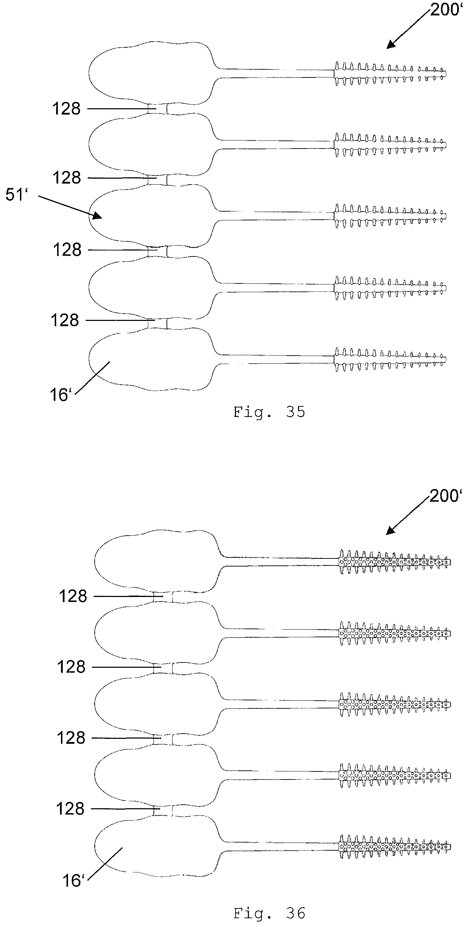

Die in den Figuren 35 und 36 entsprechend dargestellte Produktgruppe 200' weist lediglich eine Materialbrücke 128 zwischen den Griffen 16' der benachbarten Bürsten bzw. Interdentalbürsten 10 auf. Auch diese Materialbrücken 128 sind aus der ersten Kunststoffkomponente gebildet und können eine Sollbruchstelle S in Form einer Perforation oder einer Kerbe bzw. einer Materialschwächung aufweisen.

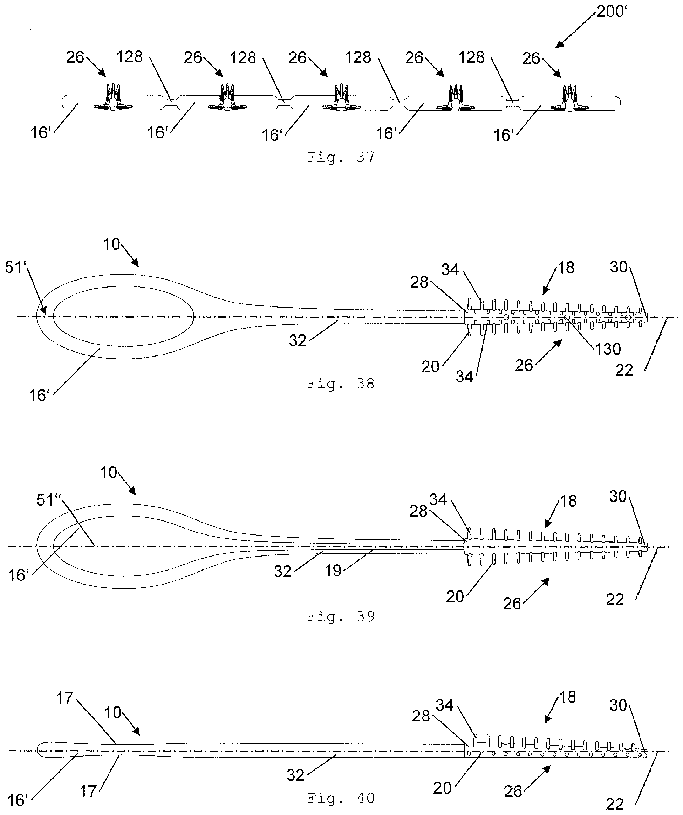

Auf den Griff 16' und auf das Halselement 32 der einzelnen Bürsten ist entsprechend keine zweite Kunststoffkomponente aufgebracht. In der Frontalansicht gemäss Figur 37 erkennt man nochmals die Verbindung der Bürsten der Produktgruppe 200' über die einzelnen Materialbrücken 128 zwischen den Griffen 16' sowie die vorstehend beschriebene Geometrie des Borstenfeldes 26. Der Tragkern 24 ist im Querschnitt trapezförmig ausgebildet. Vorzugsweise besteht eine Produktgruppe 200' wiederum jeweils aus fünf Bürsten.

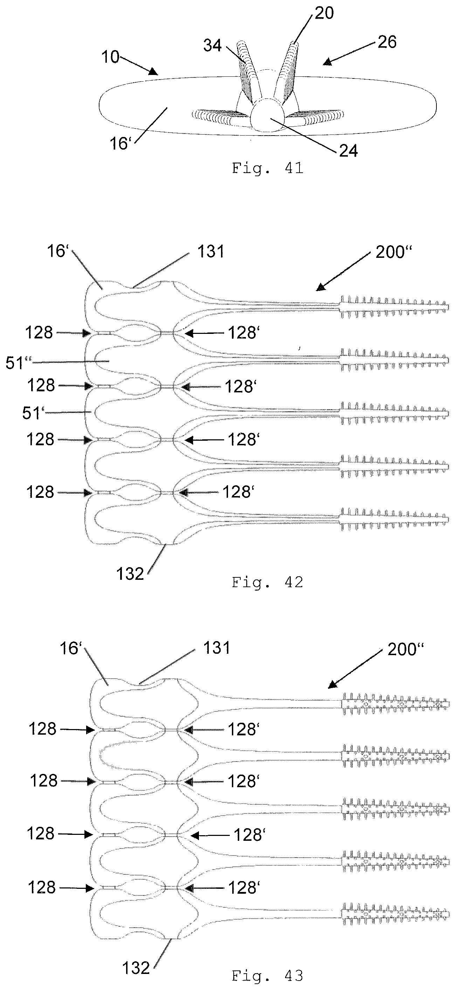

Bei der in den Figuren 38-40 dargestellten Bürste sind auf der Oberseite des Tragkerns 24 bzw. Borstenstamms 18 zwei Borstenreihen 34 angeordnet, welche in Richtung des dem Halselement 32 abgewandten Endes des Borstenstamms 18 (welcher sich, wie auch der Tragkern in dieser Richtung verjüngt) zusammenlaufen und welche, wie in Figur 41 veranschaulicht, nach aussen geneigt (d.h. nicht im Wesentlichen vertikal aber auch nicht radial) von der Oberseite des Tragkerns 24 abstehen. Zudem sind wiederum zwei im Wesentlichen horizontal von dem Tragkern 24 bzw. von dem Borstenstamm 18 abstehende Borstenreihen 34 vorgesehen.

Die kappenartige Verlängerung 30 der Schicht/Ummantelung 28 umschliesst auch hier das dem Halselement 32 abgewandte freie Ende des Tragkerns bzw. des Borstenstamms 18. Bei dieser Bürste ist die zweite Kunststoffkomponente auf das hintere, dem Halselement 32 abgewandte, Ende des Griffs 16' aufgespritzt, wobei die zweite Kunststoffkomponente am Griff 16' einen grossen Teil der Oberfläche sowohl vorne wie auch hinten überdeckt, während sie auf der Rückseite am Halselement 32 (vgl. Figur 39 ) einen wesentlichen Teil der Oberfläche bedeckt und die Oberfläche des Tragkerns 24 komplett bedeckt.

Es besteht allerdings auch die Möglichkeit, dass analog zu Figur 29 die untere Seite des Tragkerns nicht mit der zweiten Kunststoffkomponente bedeckt ist. Der Griff 16' der Bürste weist auf der Vorder- wie auf der Rückseite jeweils eine muldenförmige Einbuchtung 17 zum Besseren halten auf, wie in Fig. 40 zu sehen. Auf der Rückseite des Griffs 16' (vgl. Figur 39) wird die zweite Materialkomponente in einer länglichen Einbuchtung 19 des Halselements 32 geführt. Da der Anspritzpunkt 51" am hinteren Ende des Griffs 16' liegt fliesst so die zweite Kunststoffkomponente von dort durch die muldenförmige Einbuchtung des Griffs 17 und die längliche Einbuchtung 19 des Halselements 32 bis zum Tragkern, wo sie schliesslich (in der entsprechenden Borstenfeldkavität) die Schicht bzw. Ummantelung 28 mit den Borsten 20 ausbildet. In Figur 38 erkennt man die Stützstellen 130 an denen die Stützelemente 74 der Borstenfeldkavität 50 (vgl. analog Figur 13 ) anliegen und verhindern, dass der Tragkern 24 in radialer Richtung bewegt wird und ggf. die Öffnungen für die einzelnen zu bildenden Borsten 20 verschliesst. Für diese Variante wird in der Regel ein Heisskanalsystem vorgesehen, damit die zweite Kunststoffkomponente auf ihrem relativ langen Fliessweg nicht frühzeitig erstarrt.

Eine Produktgruppe 200" mit Bürsten, welche den in den Figuren 38-41 gezeigten Bürsten sehr ähnlich sind, wird in den Figuren 42-43 illustriert. Lediglich die Form der Griffe 16' weicht von der ovalen Griffform gemäss den Figuren 38-40 ab.

Die vorliegende Griffform der Bürsten ist im Wesentlichen rechteckig und weist an den Seiten jeweils eine seitliche Einbuchtung 131 auf. Dies hängt damit zusammen, dass vorliegend die einzelnen Bürsten der Produktgruppe 200" über zwei Materialbrücken 128, 128' verbunden sind, wobei die Materialbrücken 128 aus der ersten Kunststoffkomponente und die Materialbrücken 128' aus der zweiten Kunststoffkomponente gebildet sind.

Die Materialbrücken 128 aus der ersten Kunststoffkomponente sind jeweils im hinteren Bereich des Griffs 16' angeordnet und die Materialbrücken 128' aus der zweiten Kunststoffkomponente sind jeweils im vorderen Bereich des Griffs 16' angeordnet. Bei dieser Ausgestaltung muss nicht auf jeder Bürste ein Anspritzpunkt für die zweite Kunststoffkomponente vorhanden sein.

Die zunächst aus der ersten Kunststoffkomponente gespritzten Griffe 16' (mitsamt Halselement und Tragkern) liegen dicht beieinander. Zudem weisen die Griffe 16' im Bereich der (später zu spritzenden zweiten Materialbrücke 128') Übergänge 132 auf der Ober- bzw. der Rückseite auf, über welche sich die zweite Kunststoffkomponente verteilen kann. Somit muss nicht auf jedem Produkt bzw. jeder Bürste ein Anspritzpunkt für die zweite Kunststoffkomponente vorgesehen sein. Vorzugsweise besteht auch diese Produktgruppe 200" jeweils aus fünf Bürsten.

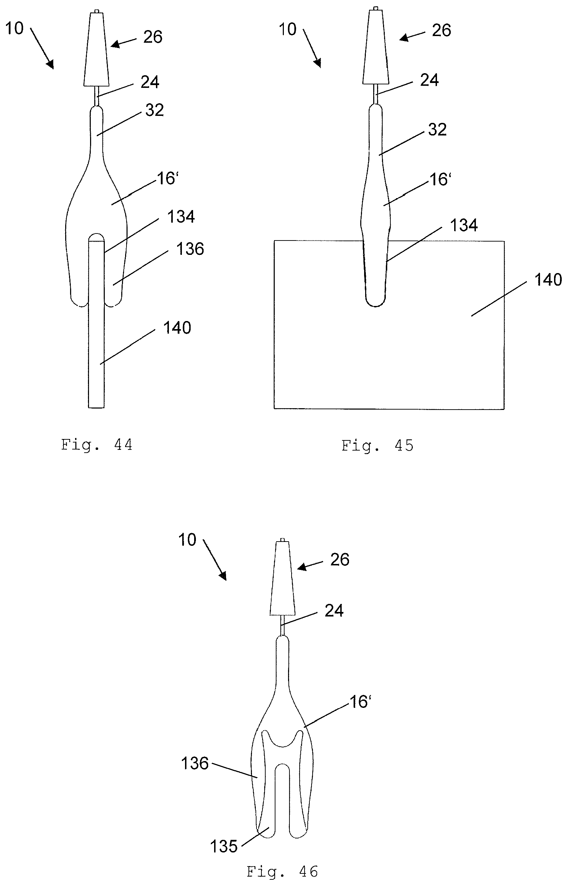

In den Figuren 44-46 wird schliesslich eine weitere Variante einer Interdentalbürste gezeigt, welche am hinteren Ende des Griffs 16' eine Einkerbung 134 zum Aufstecken der Bürste auf eine korrespondierende Halterung 140 oder etwa einen Becher oder ein Glas, aufweist. In der schematisch dargestellten beispielhaften Ausführungsform handelt es sich um eine Interdentalbürste mit umspritztem Draht bzw. Tragkern 24, welcher vom Halselement 32 abragt und ein Borstenfeld 26 trägt.

Das Material der zumindest einen Kunststoffkomponente für den Griff 16' und das Halselement 32 kann so gewählt werden, dass die beiden, die Einkerbung 134 umgebenden seitlichen Flanken 136 (bzw. Klemmarme) des Griffs 16' federnd ausgestaltet sind und so ggf. form- und kraftschlüssig auf die Halterung 140, das Glas oder den Becher o.ä. aufgebracht werden können. Der Griff 16' bzw. der Griff 16' und das Halselement 32 können auch aus zwei (oder mehr) verschiedenen Kunststoffkomponenten gespritzt sein. In der bevorzugten Ausführungsform ist die Einkerbung 134 mit einer Umrandung 135 aus einer zweiten bzw. weiteren Kunststoffkomponente umspritzt, welche regelmässig eine Weichkomponente darstellt. Hierdurch kann der Halt der Bürste auf die jeweilige Halterung 140 weiter verbessert werden. Vorliegend ist die Umrandung 135 H-förmig ausgebildet, was für die Handhabung vorteilhaft sein kann. Die unteren Enden der seitlichen Flanken 136 sind vorzugsweise vollständig von der Weichkomponente umgeben. Wie in der seitlichen Ansicht gemäss Figur 45 zu sehen, verjüngen sich die seitlichen Flanken 136 zu ihrem unteren Ende hin.

Eine derartige Einkerbung 134 und Umrandung 135 können selbstverständlich auch in einer Interdentalbürste mit einem aus Kunststoff gespritztem Tragkern, wie sie in den Figuren 23-43 veranschaulicht wird (sowie in entsprechenden Produktgruppen), vorgesehen sein.

Der Anspritzpunkt für die erste Kunststoffkomponente 51' liegt im Übrigen bei den Ausführungsformen gemäss den Figuren 23 bis 46 bevorzugt im Griffbereich. Es sind, je nach Ausgestaltung, einer oder mehrere Anspritzpunkte pro Produkt bzw. Produktgruppe denkbar. Vorzugsweise wird ein Anspritzpunkt vorgesehen sein, wobei sich das Kunststoffmaterial im einzelnen Produkt und über die Materialbrücken verteilt.

Die jeweiligen Bürsten gemäss den Figuren 23 bis 46 können jeweils in der Trennebene eines zweiteiligen Spritzgusswerkzeugs gespritzt und leicht entformt werden, was eine besonders kostengünstige und effiziente Produktion ermöglicht. Das Spritzgusswerkzeug für diese Ausführungsformen braucht regelmässig auch keine Halswerkzeugteile bzw. Klemmstempel.

Selbstverständlich sind die in dieser Schrift gezeigten Ausgestaltungsvarianten beispielhaft. Im Rahmen der vorliegenden Erfindung können manche einzelne Ausprägungen und Elemente dieser Ausgestaltungsvarianten ohne weiteres mit anderen Ausgestaltungsvarianten kombiniert werden.

Die gemachten Beschreibungen für spezifische Figuren lassen sich selbstverständlich auch auf andere Figuren übertragen, die gleiche oder ähnliche Ausprägungen zeigen und in welchen die Ausprägungen nicht im gleichen Detail beschrieben sind.

## Patentansprüche

1. Interdentalbürste, aufweisend einen eine Längsrichtung (22) definierenden Borstentragstamm (18) mit einem länglichen Tragkern (24),
ein Borstenfeld (26) mit vom Borstentragstamm (18) abstehenden Borsten (20) und ein den Tragkern (24) mit einem Griff (16`) verbindendes Halselement (32), wobei
der Griff (16'), der Tragkern (24) und das Halselement (32) integral aus einer ersten Kunststoffkomponente aus Hartmaterial gespritzt sind, und wobei
auf den Tragkern (24) eine zweite Kunststoffkomponente aus Weichmaterial in Form einer integralen Schicht (28) mit von dieser abstehenden Borsten (20) aufgebracht ist, wobei die integrale Schicht (28) aus Weichmaterial vorzugsweise bündig mit dem Halselement (32) auf den Tragkern (24) aufgebracht ist und **dadurch gekennzeichnet, dass**
sich der Anspritzpunkt (51, 51'') der zweiten Kunststoffkomponente am vorderen, dem Halselement (32) zugewandten, Ende des Griffs (16') befindet.

2. Interdentalbürste nach Anspruch 1, wobei das Halselement (32) teilweise von der zweiten Kunststoffkomponente ummantelt ist.

3. Interdentalbürste nach Anspruch 1 oder 2, wobei die zweite Kunststoffkomponente am Griff (16') einen kleinen Teil der Oberfläche bedeckt, wobei die zweite Kunststoffkomponente auf einer Rückseite am Halselement (32) einen wesentlichen Teil der Oberfläche bedeckt und wobei die zweite Kunststoffkomponente die Oberfläche des Tragkerns (24) komplett oder aber mit Ausnahme einer unteren Seite bedeckt.

4. Interdentalbürste nach einem der vorhergehenden Ansprüche, wobei die zweite Kunststoffkomponente in Mulden (17) oder einem Loch im Griff (16') aufgenommen ist, wo sie einen Abschnitt mit erhöhter Griffigkeit bildet.

5. Interdentalbürste nach einem der vorhergehenden Ansprüche, wobei das Halselement (32) Kanäle aufweist, welche das Fliessen der zweiten Kunststoffkomponente ermöglichen oder zumindest unterstützen.

6. Interdentalbürste nach einem der vorhergehenden Ansprüche, wobei der Tragkern (24) mehrere in Längsrichtung voneinander beabstandete Stützstellen (130) aufweist, welche vorzugsweise frei von Material der zweiten Kunststoffkomponente sind.

7. Interdentalbürste nach Anspruch 6, wobei der Tragkern (24) einen geringeren Durchmesser aufweist als das Halselement (32), wobei sich der Tragkern (24) in Richtung seines dem Halselement (32) abgewandten Endes hin verjüngt.

8. Interdentalbürste nach einem der vorhergehenden Ansprüche, wobei die integrale Schicht (28) derart ausgebildet, dass sie im Bereich des Borstenstamms (18) eine Ummantelung (28) des Tragkerns (24) bildet, wobei vorzugsweise die Ummantelung (28) kappenartig das freie Ende des Tragkerns (24) überdeckt.

9. Interdentalbürste nach Anspruch 8, wobei die Dicke der Ummantelung (28), ausserhalb dem Bereich der Borsten (20) und bezüglich der Längsrichtung in radialer Richtung gemessen, zwischen 0.05 mm bis 0.3 mm, vorzugsweise 0.1 mm bis 0.2 mm, beträgt.

10. Interdentalbürste nach einem der vorhergehenden Ansprüche, wobei diese eine Länge von 35 mm bis 70 mm, bevorzugt von 40 mm bis 55 mm aufweist, und vorzugsweise eine Höhe inklusive des Borstenfelds von 0.8 mm bis 2.8 mm, bevorzugt von 1 mm bis 2 mm aufweist sowie vorzugsweise eine Breite von 3 mm bis 12 mm, bevorzugt von 5 mm bis 8 mm, aufweist.

11. Interdentalbürste nach einem der vorhergehenden Ansprüche, wobei das Verhältnis von Borstendurchmesser zum Durchmesser des Tragkerns (24) von 1:8 bis 3:1, vorzugsweise von 1:2 bis 3:4, beträgt.

12. Interdentalbürste nach einem der vorhergehenden Ansprüche, wobei das Verhältnis des Borstendurchmessers zum Durchmesser des Borstentragstamms (18) von 1:30 bis 3:2, vorzugsweise von 1:6 bis 1:3, beträgt.

13. Interdentalbürste nach einem der vorhergehenden Ansprüche, wobei die Borsten (20) vom Borstentragstamm (18) wenigstens annähernd radial abstehen und in in Längsrichtung (22) verlaufenden Borstenreihen (34) angeordnet sind, wobei vorzugsweise die Borstenreihen (34) in Umfangsrichtung gleichmässig verteilt sind, wobei vorzugsweise die Borsten (20) in rechtwinklig zur Längsrichtung (22) verlaufenden Borstenebenen (36) angeordnet sind und wobei vorzugsweise die Borstenebenen (36) in Längsrichtung einen konstanten Abstand aufweisen.

14. Interdentalbürste nach einem der vorhergehenden Ansprüche, wobei die Interdentalbürste kombiniert ist mit einem Flosser, einem Zahnstocher oder einem Zungenreiniger.

## Claims

1. Interdental brush comprising a bristle-carrying stem (18)
defining a longitudinal direction (22) with an elongated supporting core (24),
a bristle field (26) with bristles (20) projecting from the bristle-carrying stem (18), and a neck element (32) connecting the supporting core (24) to a handle (16'), wherein
the handle (16'), the support core (24) and the neck element (32) are integrally molded from a first plastic component made of hard material, and wherein
a second plastic component made of soft material is applied to the support core (24) in the form of an integral layer (28) with bristles (20) projecting therefrom, wherein the integral layer (28) made of soft material is preferably applied flush with the neck element (32) to the support core (24), and **characterized in that** the injection point (51, 51") of the second plastic component is located at the front end of the handle (16') facing the neck element (32).

2. Interdental brush according to claim 1, wherein the neck element (32) is partially encased by the second plastic component.

3. Interdental brush according to claim 1 or 2, wherein the second plastic component covers a small part of the surface on the handle (16'), wherein the second plastic component covers a substantial part of the surface on a rear side of the neck element (32), and wherein the second plastic component covers the surface of the support core (24) completely or with the exception of a lower side.

4. Interdental brush according to any one of the preceding claims, wherein the second plastic component is received in recesses (17) or a hole in the handle (16'), where it forms a section with increased grip.

5. Interdental brush according to any one of the preceding claims, wherein the neck element (32) has channels which enable or at least support the flow of the second plastic component.

6. Interdental brush according to any one of the preceding claims, wherein the support core (24) has a plurality of support points (130) spaced apart from each other in the longitudinal direction, which are preferably free of material of the second plastic component.

7. Interdental brush according to claim 6, wherein the support core (24) has a smaller diameter than the neck element (32), wherein the support core (24) tapers toward its end facing away from the neck element (32).

8. Interdental brush according to any one of the preceding claims, wherein the integral layer (28) is designed such that it forms a sheath (28) around the support core (24) in the area of the bristle stem (18), wherein the sheath (28) preferably covers the free end of the support core (24) like a cap.

9. Interdental brush according to claim 8, wherein the thickness of the sheath (28), measured outside the area of the bristles (20) and in the radial direction with respect to the longitudinal direction, is between 0.05 mm and 0.3 mm, preferably between 0.1 mm and 0.2 mm.

10. Interdental brush according to any one of the preceding claims, wherein it has a length of 35 mm to 70 mm, preferably 40 mm to 55 mm, and preferably a height including the bristle field of 0.8 mm to 2.8 mm, preferably from 1 mm to 2 mm, and preferably a width of 3 mm to 12 mm, preferably from 5 mm to 8 mm.

11. Interdental brush according to any one of the preceding claims, wherein the ratio of the bristle diameter to the diameter of the support core (24) is from 1:8 to 3:1, preferably from 1:2 **to 3:4.**

12. Interdental brush according to any one of the preceding claims, wherein the ratio of the bristle diameter to the diameter of the bristle support stem (18) is from 1:30 to 3:2, preferably from 1:6 to 1:3.

13. Interdental brush according to any one of the preceding claims, wherein the bristles (20) protrude at least approximately radially from the bristle-carrying stem (18) and are arranged in rows of bristles (34) extending in the longitudinal direction (22), wherein the rows of bristles (34) are preferably distributed evenly in the circumferential direction, wherein the bristles (20) are preferably arranged in bristle planes (36) extending at right angles to the longitudinal direction (22) and wherein preferably the bristle planes (36) have a constant spacing in the longitudinal direction.

14. Interdental brush according to any one of the preceding claims, wherein the interdental brush is combined with a flosser, a toothpick, or a tongue cleaner.

## Revendications

1. Brosse interdentaire comprenant une tige porte-
poils (18) définissant une direction longitudinale (22) avec un noyau porteur allongé (24),
un champ de poils (26) avec des poils (20) s'écartant de la tige porte-poils (18) et un élément de col (32) reliant le noyau porteur (24) à une poignée (16'),
la poignée (16'), le noyau porteur (24) et l'élément de col (32) sont moulés d'un seul tenant à partir d'un premier composant en matière plastique dure, et
un deuxième composant en matière plastique souple est appliqué sur le noyau porteur (24) sous la forme d'une couche intégrale (28) avec des poils (20) s'écartant de celle-ci, la couche intégrale (28) en matériau souple est de préférence appliquée à fleur de l'élément formant col (32) sur le noyau porteur (24), et **caractérisé en ce que** le point d'injection (51, 51'") du deuxième composant en matière plastique se trouve à l'extrémité avant de la poignée (16') tournée vers l'élément de col (32).

2. Brosse interdentaire selon la revendication 1, dans laquelle l'élément de col (32) est partiellement recouvert par le deuxième composant en plastique.

3. Brosse interdentaire selon la revendication 1 ou 2, dans laquelle le deuxième composant en plastique recouvre une petite partie de la surface de la poignée (16'), dans laquelle le deuxième composant en plastique recouvre une partie importante de la surface sur une face arrière de l'élément de col (32) et dans laquelle le deuxième composant en plastique recouvre complètement la surface du noyau porteur (24) ou à l'exception d'une face inférieure.

4. Brosse interdentaire selon l'une des revendications précédentes, dans laquelle le deuxième composant en plastique est logé dans des cavités (17) ou un trou dans la poignée (16'), où il forme une partie offrant une meilleure prise.

5. Brosse interdentaire selon l'une des revendications précédentes, dans laquelle l'élément de col (32) comporte des canaux qui permettent ou au moins favorisent l'écoulement du deuxième composant plastique.

6. Brosse interdentaire selon l'une des revendications précédentes, dans laquelle le noyau porteur (24) comporte plusieurs points d'appui (130) espacés les uns des autres dans le sens longitudinal, qui sont de préférence exempts de matériau du deuxième composant plastique.

7. Brosse interdentaire selon la revendication 6, dans laquelle le noyau porteur (24) présente un diamètre inférieur à celui de l'élément de col (32), le noyau porteur (24) s'amincissant vers son extrémité opposée à l'élément de col (32).

8. Brosse interdentaire selon l'une des revendications précédentes, la couche intégrale (28) étant conçue de telle sorte qu'elle forme, dans la zone de la tige porte-poils (18), un revêtement (28) du noyau porteur (24), le revêtement (28) recouvrant de préférence l'extrémité libre du noyau porteur (24) à la manière d'un capuchon.

9. Brosse interdentaire selon la revendication 8, l'épaisseur de l'enveloppe (28), mesurée à l'extérieur du champ des poils (20) et dans le sens radial par rapport au sens longitudinal, étant comprise entre 0,05 mm et 0,3 mm, de préférence entre 0,1 mm et 0,2 mm.

10. Brosse interdentaire selon l'une des revendications précédentes, celle-ci présentant une longueur comprise entre 35 mm et 70 mm, de préférence entre 40 mm et 55 mm, et de préférence une hauteur, y compris le champ de poils, comprise entre 0,8 mm et 2,8 mm, de préférence de 1 mm à 2 mm, et de préférence une largeur comprise entre 3 mm et 12 mm, de préférence entre 5 mm et 8 mm.

11. Brosse interdentaire selon l'une des revendications précédentes, dans laquelle le rapport entre le diamètre des poils et le diamètre du noyau de support (24) est compris entre 1:8 et 3:1, de préférence entre 1:2 et 3:4.

12. Brosse interdentaire selon l'une des revendications précédentes, dans laquelle le rapport entre le diamètre des poils et le diamètre de la tige porte-poils (18) est compris entre 1:30 et 3:2, de préférence entre 1:6 et 1:3.

13. Brosse interdentaire selon l'une des revendications précédentes, dans laquelle les poils (20) s'écartent au moins approximativement radialement de la tige porte-poils (18) et sont disposés en rangées de poils (34) s'étendant dans le sens longitudinal (22), les rangées de poils (34) sont réparties uniformément dans le sens circonférentiel, les poils (20) étant de préférence disposés dans des plans de poils (36) s'étendant perpendiculairement au sens longitudinal (22) et les plans de poils (36) présentant de préférence un écartement constant dans le sens longitudinal.

14. Brosse interdentaire selon l'une des revendications précédentes, la brosse interdentaire étant combinée à un fil dentaire, un cure-dent ou un nettoyeur de langue.
